(19) **Europäisches Patentamt / European Patent Office / Office européen des brevets**

(11) **EP 4 579 542 A1**

(12) **EUROPEAN PATENT APPLICATION**

(43) Date of publication:
**02.07.2025 Bulletin 2025/27**

(21) Application number: **23307429.3**

(22) Date of filing: **29.12.2023**

(51) International Patent Classification (IPC):
**G06N 10/80** (2022.01)  **G06N 10/60** (2022.01)
**G06N 5/01** (2023.01)  G06N 10/40 (2022.01)

(52) Cooperative Patent Classification (CPC):
**G06N 10/40**; G06N 10/60

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Pasqal**
**91300 Massy (FR)**

(72) Inventors:
• **VOVROSH, Joseph**
**91300 MASSY (FR)**
• **DAUPHIN, Alexandre**
**91300 MASSY (FR)**
• **GHOSH, Atiyo**
**91300 MASSY (FR)**

(74) Representative: **Slingsby Partners LLP**
**1 Kingsway**
**London WC2B 6AN (GB)**

(54) **METHOD FOR DETERMINING A PLURALITY OF SPATIAL POSITIONS FOR A PLURALITY OF QUBITS AND EMULATION METHOD**

(57) A computer implemented method for determining a plurality of spatial positions for a plurality of qubits. The plurality of qubits associated with a graph with a plurality of vertices and edges. No underlying lattice is used for defining vertex positions. The method determines a first spatial position based on a first distance between a first pair of the qubits. The first distance is based on an average value of a parameter associated with the plurality edges. The method determines a second spatial position based on a second distance between a second pair of the qubits. The second distance based on the average value. The first pair of the qubits comprising at least one different qubit to the second pair of the qubits. The second spatial position being a different spatial position to the first spatial position.

Fig. 4

**EP 4 579 542 A1**

Processed by Luminess, 75001 PARIS (FR)

**Description**

<u>Field</u>

The field is in emulation, in particular, but not limited to emulating a quantum computation using a tensor network. A further field is graph problems and the solving of them using quantum computer related processing, in particular, but not limited to using analogue neutral atom quantum computers and emulators.

<u>Background</u>

Graphs can typically be used to encode problems to be solved. Graphs have vertices (also referred to as nodes) and edges that each connect two nodes. Graph based data is often represented in 2D or 3D space where the values of edges between nodes equates to distances in graph-space. Quantum computers have been previously used to solve graph-based problems. Examples of such computers are neutral atom quantum computers, superconducting quantum computers.

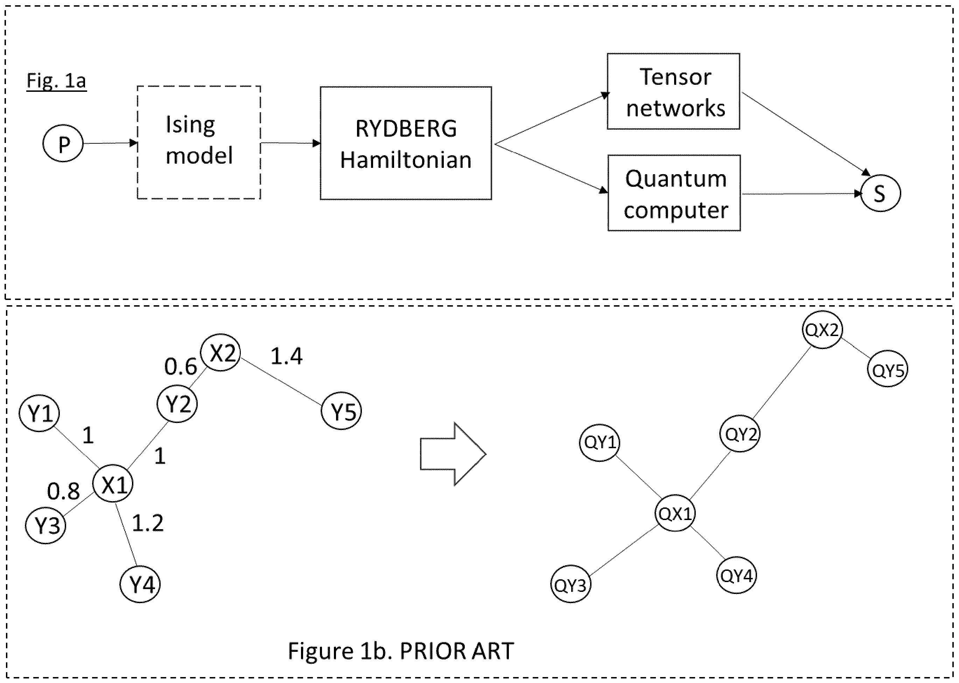

Figure 1a shows a general high-level overview of some example methods of solving graph problems wherein options are provided between using a classical computer or using analogue neutral atom quantum computing relates processes. Given an initial graph problem P, one can use different ways to encode the problem to provide a solution S. An Ising model may be used to develop the problem, or may even be the starting problem 'P' itself, which in the figure, in turn is transformed into a Rydberg Hamiltonian that may either be solved by implementing the Hamiltonian via an analogue neutral atom quantum computer or solved using tensor networks on a classical computer.

For initial problems, such as, but not limited to, problems involving arrangements of atoms, the use of a Hamiltonian operator within an evolution operator (as presented in equation 1 herein) maybe required. The evolution operator relates the output state |ψ(t)> of the qubits at time 't', to a solution to the problem we are trying to solve:

$$|\psi(t)\rangle = e^{-\int_0^t iH(t)dt} |\psi(0)\rangle$$

[Equ. 1]

where |ψ(0)> is the initial state of the qubits in the quantum system of the quantum computer and H(t) is the Hamiltonian operator that encodes the problem. In a neutral atom quantum computer one or more driving electromagnetic (EM) fields (typically one or more lasers) is imparted onto the qubits of the quantum computer. Typically, the Hamiltonian H(t) contains the data for the qubit positions and the properties of the driving EM field. The properties of the EM field that may vary over time and that are represented in the Hamiltonian operator are the Rabi frequency and wavelength detuning amounts.

Determining values for the exponential of the Hamiltonian 'H' is difficult to compute on a classical electronic computer. Faced with such problems it is advantageous to use a quantum computer or a classical system implementing a model or algorithm for dealing with such an evolution operator such as a tensor network model.

Previous approaches to solving problems based on graphs, and using quantum computers, have involved programming in the qubit positions so that they directly relate to the graph node positions. Figure 1b shows an example prior art approach to solving a problem using a quantum computer in this manner. The problem involves two elements of a first type which are labelled as graph vertices X1, X2. The problem also involves five elements of a second type which are labelled Y1, Y2, Y3, Y4, Y5. Graph edges connect one of the 'X' vertices to one of the 'Y' vertices. The edge values are shown next to the edge in figure 1b and the length of the edge in the figure represents the value magnitude, although the lengths are not to scale.

Problems involving graphs like figure 1b may be solved on an analogue quantum computer such as a neutral atom quantum computer with a 'register' of atoms that can interact using the Van der Waals force, each atom acting as a qubit. When using such a quantum computer, the nature of the problem is encoded by the positions of the neutral atoms and the properties of an electromagnetic (EM) signal that can drive neutral atoms into a Rydberg state. When using such a quantum computer, previous systems have directly linked each node in the graph problem to an atom in the register wherein the relative positions of the atoms in the register reflect the edge values between the nodes in the problem. In other words, the edge values in the graph of figure 1b are encoded by the distances between the atoms. The repulsive force of Rydberg blockade is inversely proportional to the sixth power of the distance between qubit atoms; hence, the closer one atom is to another in the register the greater the effect the Rydberg interaction will be. As such, the larger the edge value between two nodes of the graph, the nearer the two corresponding qubit atoms are to each other when the problem is encoded on the quantum computer. This can be seen on the right-hand side of figure 1b which shows a spatial arrangement of atoms in the quantum computer encoding the graph problem on the left-hand side of figure 1b. Two qubit atoms QX1, QX2 respectfully represent nodes X1 and X2 whilst five qubit atoms QY1, QY2, QY3, QY4, QY5 respectfully represent nodes Y1-Y5. The inverse relationship between edge value and atom distance can be seen by the edge connecting X2 and Y2 being shorter than the edge connecting X2 and Y5; whilst in the quantum computer the distance between QX2 and QY2 is longer than the distance between QX2 and QY5.

The dataset representing the qubit positions, in the above example, therefore includes specific details for the positions of each individual qubit and is therefore a full and detailed dataset. This dataset may occupy undesirable amounts of memory space, particularly for problems with a large number of vertices. Furthermore, the number of calculations to determine the required qubit atom distance in the quantum computer may become undesirably large, hence a burden on computer processing time and power usage. Furthermore, to generate the originating graph on the left-hand side of figure 1b, separate input values are required for each graph edge. Such input values defining the graph (to be computed via qubits) may also present a burden in terms of initial measurements required to obtain the edge values and the memory storage requirements needed to store them. This becomes particularly apparent when the graph problem is required to be executed using a graph with a large number of nodes and edges. An example of such a large graph problem is a problem involving an amorphous solid material where the atomic-level detail of the material itself is included into the problem. An example graph representing an amorphous solid may use nodes as atoms and edges as bonds and the edge values as the strength of those bonds or the distances between amorphous solid atoms. Using a quantum computer to solve such a problem may require a large number of graph nodes, hence qubit atoms, to cover the extent of the amorphous solid and its large variations in local atomic structure such as different bond strengths. All these different inputs for setting up the problem, for example each bond strength of each atom, may be data that is difficult to initially measure or otherwise derive.

Given the difficulties in solving problems with irregular spaced nodes, prior art has often focussed on using regular spaced nodes. For example, in the materials field, the majority of research has focussed on periodic crystalline systems that allow the calculations to utilise the inherent translational invariance. An example of such a prior art methodology is discussed underneath wherein a Rydberg Hamiltonian is derived for a quantum computer for a square 2D lattice array of graph nodes that represent atoms of a material that are affected by components of a magnetic field. The Hamiltonian 'H' for an Ising model for a square lattice of nodes is given by equation 2.

$$H = J \sum_{\langle i,j \rangle} \sigma_i^z \sigma_j^z + h_x \sum_i \sigma_i^x + h_z \sum_i \sigma_i^z$$

[Equ. 2]

In equation 2: 'z' and 'x' are referring to the orthogonal z and x directions that define the plane upon which the lattice of nodes is situated upon and the respective axes along which the nodes are periodically spaced; 'i' and 'j' refer to different nearest neighbour nodes in the lattice wherein the nearest neighbour 'j' to 'i' is defined as one of the closest nodes along any of the +x, -x, +y, -y, +z, -z directions; $\sigma_i^z, \sigma_j^z, \sigma_j^x$, are Pauli matrices for the respective $i^{th}$ and $j^{th}$ nodes with respect to the x and z axes; $h_x$ represents the magnetic field strength in x; $h_z$ represents the magnetic field strength in z; J represents nearest neighbour interaction strength. Because in a square lattice the x and z node spacings are the same, a single value of J is used.

The prior art then generates a Rydberg Hamiltonian from the Ising Hamiltonian in equation 2. The Rydberg Hamiltonian may be a Rydberg Ising Hamiltonian as shown in equation 3 whereby $C_6$ is a constant relative to the Rydberg state in consideration; $r_{ij}$ is the distance between the $i^{th}$ and $j^{th}$ atoms; $n_i = (1+ \sigma_i^z)/2$ which is the Rydberg state occupancy; $n_j = (1+ \sigma_j^z)/2$; $\hbar$ is the reduced Planks constant; $\Omega$ is time dependent the Rabi frequency and $\delta$ is the time dependent detuning.

$$H_{RYD} = \sum_{i \neq j} \frac{C_6}{r_{i,j}^6} n_i n_j + \frac{\hbar}{2} \Omega(t) \sum_i \sigma_i^x - \hbar \delta(t) \sum_i n_i$$

[Equ. 3]

Given that in lattice systems the interactions are uniform, when the qubits are placed in an equivalent lattice to the theoretical model of Eq. 2 their interaction landscape will reflect the underlying interactions of the problem of interest. A slight variation on this is systems with small disorder in node interaction strength. This is replicated in a neutral atom device by positioning the atoms at the vertices of the underlying lattice but with a small offset from the vertex in any of the X Y or Z directions. The small offset is randomised. In both of these methods using a lattice-based layout, the qubit-qubit spacing is derived from a standard layout.

In the case of more complicated interaction landscapes, in which $J \rightarrow J_{ij}$ is now qubit pair dependant, the distances between the qubit atoms '$r_{ij}$' are derived from minimising a loss function L given by equation 4.

$$L = \sum_{i,j} \left| \frac{C_6}{r_{i,j}^6} - J_{i,j} \right|$$

[Equ. 4]

This prior art method of encoding problems onto quantum computers involves: knowing desired positional relationships between nodes; evaluating a trial solution of the qubit positions in the register and calculating the error as described in each term of Eq. 4; wherein the error is how far away each qubit-qubit interaction is from the known value of what it should be. The qubit positions are then updated accordingly with a standard optimisation procedure, such as ADAM, until the error is below some predetermined threshold. The resulting qubit positions at the end of this procedure are used in the quantum computer.

Thus, as is shown by equation 4, the prior art determines the distance '$r_{ij}$' for separating the qubit atoms using the $J_{ij}$ values in the Ising model. These $J_{ij}$ values represent the interactions between the different nodes of the problem, therefore each '$r_{ij}$' value between two qubits 'i' and 'j' directly corresponds to the known node interaction $J_{i,j}$. A prior paper using such a method includes A. Michel, S. Grijalva, L. Henriet, C. Domain, and A. Browaeys, "Blueprint for a digital-analog variational quantum eigensolver using rydberg atom arrays," Phys. Rev. A, vol. 107, p. 042602, Apr 2023.

Solving problems using the principles of quantum computing systems can be done using a quantum computer or a quantum emulator. The quantum emulator is run on a classical 'electronic' computer having one or more software and/or hardware modules. Certain aspects of emulating a quantum computing system may be difficult to replicate in a classical computer. Tensor networks provide one method for emulating a quantum computer. Several types of Tensor networks are known including Matrix Product State (MPS), Tree Tensor Networks and PEPs Tensor networks.

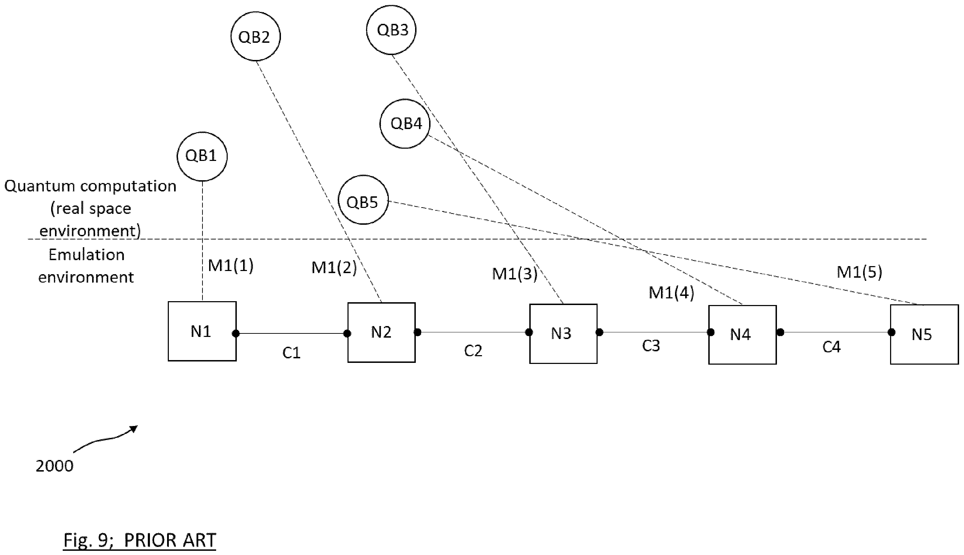

Tensor networks typically refer to a network of mathematical objects (tensors) used to describe physical properties. The tensors are connected to each other by bonds. For certain quantum systems being emulated, tensor networks suffer from computation issues, such as high amount of memory usage and large numbers of computer processing steps. One example of a quantum system that may encounter such computational issues is a 2D system of qubits emulated using a Matrix Product State (MPS) tensor network such that two strongly interacting qubits have been mapped to nodes within the MPS are far away from each other terms of the number of connections, i.e., where there are many other nodes in between them in the chain. Strongly interacting qubits are typically highly entangled when emulating the physics of such a system and the build-up of entanglement between distant nodes in the MPS is known to result in large computation requirements. Figure 9 shows an example of such a scenario 2000 where qubits QB1-5 are arranged in space in the quantum computation and are mapped directly to the tensor network nodes N1-5 with mappings M1(1-5) for the overall node-qubit mapping M1. The connections between the nodes in this tensor network are shown as C1-C4. The qubits QB1-5 are mapped to nodes N1-N5 such that the nearest two other qubits to each qubit correspond to the nodes that each node is connected to via a contraction. For example, the closest two qubits to QB3 are qubits QB2 and QB4, therefore the node N3 corresponding to QB3 is connected to N2 and N4, which in turn correspond to qubits QB2 and QB4 respectively.

For this example, each qubit has a strong interaction of '1' between its closest two qubits and zero elsewhere such that the interaction matrix wherein the rows and columns of the matrix represent N1-5 sequentially is given by:

$$\begin{bmatrix} 0 & 1 & 0 & 0 & 1 \\ 1 & 0 & 1 & 0 & 0 \\ 0 & 1 & 0 & 1 & 0 \\ 0 & 0 & 1 & 0 & 1 \\ 1 & 0 & 0 & 1 & 0 \end{bmatrix},$$

note, the adjacency matrix of the MPS is given by:

$$\begin{bmatrix} 0 & 1 & 0 & 0 & 0 \\ 1 & 0 & 1 & 0 & 0 \\ 0 & 1 & 0 & 1 & 0 \\ 0 & 0 & 1 & 0 & 1 \\ 0 & 0 & 0 & 1 & 0 \end{bmatrix}.$$

Large entanglement is expected to develop between QB1 and QB5 in the quantum computation as they interact strongly, however these two qubits are positioned at the ends of the tensor network. Because of this ordering, the entanglement information between N1 and N5 representing the quantum information passed between QB1 and QB5 will need to be factored into the all the connections, hence bonds, C1-C4 so that the correlation between QB1 and QB5 is preserved. An effect of this is extra computational burden arising from the extra information required to be stored and processed in the emulation of the tensor network using the mapping M1. This example is shown only to exemplify the issue of computational burden. It should be understood that similar computational burden issues may be present when emulating other quantum systems using other types of Tensor network methods. This example is also simplified for discussion purposes as the interactions between qubits, in practice take non-binary values, for example they may be normalised, but may be continuous between 0 and 1.

The choice of which qubit is assigned to which node in the tensor network may therefore play a role in the computational burden in performing the emulation. Prior attempts have been made to try find good choices for qubit-node mappings for tensor network emulations via noting that the adjacency matrix for an MPS has a small bandwidth. The bandwidth of a matrix is defined as the smallest integer b such that all elements on the $j^{th}$ superdiagonal and subdiagonal of the matrix equal zero if j>b (thus the adjacency matrix of an MPS is 1). These previous works have aimed to minimise the matrix bandwidth of the interaction matrix by choosing an appropriate node-mapping such that the resulting interaction matrix more closely resembles the adjacency of the MPS ansatz. One of these is the Reverse Cuthill-Mckee (RCM) heuristic.

This prior art utilising the RCM method starts with an initial assignment of qubits to tensor network nodes. The method then uses a threshold whereby interaction terms in an interaction matrix take a value of 1 if they are above the threshold and a value of zero if they are below a threshold. The RCM method then re arranges the ordering of the items-node according to a heuristic to generate an adjacency matrix with a bandwidth smaller than the initial bandwidth. The ordering of the item-node is then used for an emulation. One issue with the RCM method is that it may not always find the minimum or best bandwidth for the problem and sometimes worsens the bandwidth from the initial bandwidth provided before the heuristic. A second issue is that this RCM method is only relevant for a subset of tensor networks such as an MPS.

<u>Summary</u>

According to a first aspect there is presented a computer implemented method for determining a plurality of spatial positions for a plurality of qubits; the plurality of qubits associated with a graph; the graph comprising a plurality of vertices and a plurality of edges wherein each of the qubits corresponds to a different vertex; the method comprising, in any order: a) determining a first spatial position based on a first distance between a first pair of the qubits; the first distance based on an average value of a parameter associated with the plurality edges; and, b) determining a second spatial position based on a second distance between a second pair of the qubits; the second distance based on the average value; the first pair of the qubits comprising at least one different qubit to the second pair of the qubits; the second spatial position being a different spatial position to the first spatial position.

By using an average value to define the distances, the calculation used to determine two distances may, at minimum, only require one value, i.e. the average value. This may mean that a single distance calculation may be used for both distances compared to prior art using two calculations. Furthermore, a minimum of a single parameter associated with the edges for defining the graph may be stored in a memory, for use in the method, compared to prior art using a parameter for each edge.

The first aspect may be combined with the second aspect in that an output of the first aspect, for example a graph relating to qubit positions, may be used by the second aspect. The method of the first aspect may be adapted according to any teaching herein including, but not limited to, any one or more of the following options.

Optionally, the graph comprises no underlying lattice for defining the vertex positions. In other words, the method may therefore not have a predefined structure to align the qubit positions about.

Optionally, the first qubit pair comprises a first of the plurality of qubits; the second qubit pair comprises a second of the plurality of qubits; the first and second qubits being different qubits; the step of determining the at least two spatial positions comprises: allowing for either of the first qubit or second qubit to occupy a first position; selecting the first qubit to occupy the first position; selecting the second qubit to occupy a second position different to the first position. In other words, the method may allow, in principle, at least two of the qubits occupy to a particular spatial position, but only output one of the qubits to be in that particular position.

Optionally, the plurality of qubits are accommodatable in a region of space; the step of determining the at least two spatial positions comprises determining the positions of two of the qubits in a same occupiable region of space; the region of space comprising the occupiable region of space two. In other words, prior to determining the positions of at least two qubits, the method may have predetermined one or more unoccupiable portions of the total region of space that accommodates all the qubits. The remaining one or more portions of the region of space may comprise an occupiable region that at least two of the determined qubit positions may reside.

Optionally, the method may comprise at least one of: i) storing the at least two spatial positions in a memory; ii) using the at least two spatial positions in a computation using the different spatial for the plurality of qubits.

Optionally, the method may output a control signal for operating a quantum computer for performing the computation; the quantum computer comprising the plurality of qubits; the control signal generated using the one or more positions.

Optionally, the control signal comprises data for inputting to a qubit position controlling system.

Optionally the qubit position controlling system comprises a spatial light modulator for generating a plurality of traps for trapping the plurality of qubits.

Optionally the qubit position controlling system comprises an acousto-optic deflector.

Optionally, the method may comprise using the quantum computer to perform the computation.

Optionally, the quantum computer comprises an analogue quantum computer.

Optionally, the quantum computation is an analogue quantum computation.

Optionally the quantum computer comprises a neutral atom quantum computer.

Optionally, the computation comprises an emulation of a quantum computation.

Optionally the method may output data associated with the determined spatial positions to a further method using a tensor network as described herein.

Optionally, the emulation comprises using a tensor network.

Optionally, the emulation comprises a quantum Monte Carlo method.

Optionally, the emulation comprises a quantum neural network method.

Optionally, one or both of the first distance and second distance are determined using the average value of the parameter associated with the plurality edges.

Optionally, one or both of the first distance and second distance are determined using a calculation using the average value of the parameter associated with the plurality edges; the calculation forming at least part of an optimisation routine.

Optionally, at least one of the first and second distances is further determined using a value of a standard deviation associated with the plurality of the edge values.

Optionally, the parameter is a first parameter; the method further comprises determining a set of one or more vertices of the graph using an average value of a second parameter associated with the plurality of vertices; the set of one or more vertices comprising vertices with a common relationship to a common vertex not in the set.

Optionally the common relationship comprises an edge extending between the said vertex in the set and the common vertex.

Optionally, the common relationship comprises at least one of: a) a minimum distance between the said vertex and the common vertex; b) a maximum distance between the said vertex and the common vertex. In other words, the method can use another average value to determine how many vertices are connected to a particular vertex and/or how many vertices are located within a particular region surrounding the common vertex.

Optionally, the set of vertices is further determined using a value associated with a standard deviation of the plurality of the edge values.

Optionally, the parameter is a parameter of a further graph.

Optionally the parameter relates to a plurality of edge values of the further graph.

Optionally, the average value comprises an average of a plurality of edge values of the further graph.

Optionally, the further graph comprises: a plurality of vertices comprising three or more vertices; and, a plurality of edges comprising at least two or more edges wherein each edge comprising an edge value.

Optionally, the step of determining the spatial positions comprises using a function outputting the first and second distances based on the average value; the function outputting the first and second distances upon finding a solution satisfying one or more conditions.

Optionally, the function comprises a loss function.

Associated with the first aspect is a system for determining a plurality of spatial positions for a plurality of qubits; the plurality of qubits associated with a graph; the graph comprising a plurality of vertices and a plurality of edges wherein each of the qubits corresponds to a different vertex; the system comprising a computer processor configured to, in any order: a) determine a first spatial position based on a first distance between a first pair of the qubits; the first distance based on an average value of a parameter associated with the plurality edges; and, b) determine a second spatial position based on a second distance between a second pair of the qubits; the second distance based on the average value; the first pair of the qubits comprising at least one different qubit to the second pair of the qubits; the second spatial position being a different spatial position to the first spatial position. The system may be adapted according to any feature herein including but not limited to any of the options presented for the method of the first aspect.

According to a second aspect there is presented a computer implemented method for emulating, using a tensor network, a quantum computation; the quantum computation comprising a plurality of qubits; the tensor network comprising: a plurality of nodes; a plurality of node connections for connecting the plurality of nodes; the plurality of qubits comprising at least: a first qubit, second qubit and third qubit wherein: a first interaction strength is associated with the interaction between the first qubit and the second qubit; a second interaction strength is associated with the interaction between the first qubit and the third qubit; the method comprising, for a first node-qubit mapping comprising a plurality of node-qubit links for linking each node to a different one of the plurality of qubits: I)in any order, or at least partially simultaneously: A) performing a first calculation using at least: i) a first value associated with a number of the node connections between the first node and the second node; and, ii) a second value associated with the first interaction strength; B) performing a second calculation using at least: iii) a third value associated with a number of the node connections between the first node and the third node; iv) a fourth value associated with the second interaction strength; wherein the second and fourth values are different non-zero values; II) and, C) selecting the first node-qubit mapping for use in the emulation based on at least one of: a result of the first calculation for the first node-qubit mapping; a result of the second calculation for the first node-qubit mapping; D) emulating the quantum computation using the first node-qubit mapping.

The method of the second aspect may be combined with the method of the first aspect. For example the method of the second aspect may use an output from the first aspect, such as a graph, as an input to the second aspect. The method of the second aspect may be adapted according to any teaching herein including but not limited to any one or more of the following options.

Optionally, the method comprises using an optimisation routine to select the first node qubit mapping. Optionally, the optimisation routine is performed by a computer.

Optionally, the first calculation and second calculation form at least part of the optimisation routine.

Optionally, the first node qubit mapping is associated with a matrix comprising interaction values between the nodes.

Optionally, the interaction values comprise the second and fourth values.

Optionally the second value comprises the first interaction strength.

Optionally the fourth value comprises the second interaction strength.

Optionally, the second value is a function of a first direct distance between the qubits associated first node and the second node.

Optionally, the fourth value is a function of a second direct distance between the qubits associated first node and the third node.

Optionally, the second value is proportional to the inverse of a value comprising the first direct distance to the power of an exponent.

Optionally, the fourth value is proportional to the inverse of value comprising the second direct distance to the power of an exponent.

Optionally, the direct distance is the straight-line distance between the associated qubits.

Optionally, the second value is proportional to the inverse of a value comprising the first direct distanced raised to the power of an exponent, the exponent greater than 1.

Optionally, the fourth value is proportional to the inverse of a value comprising the second direct distanced raised to the power of an exponent, the exponent greater than 1.

Optionally, the exponent for the second value and/or fourth value is 6.

Optionally, the tensor network is associated with a graph wherein: each node of the plurality of nodes is associated with a different vertex of the graph; each node connection is associated with an edge of the graph.

Optionally, the tensor network is associated with an adjacency matrix. Optionally, each row and column of the adjacency matrix corresponds to a different node in the tensor network.

Optionally, the tensor network is associated with a distance matrix.

Optionally, the distance network is derivable from the tensor network.

Optionally, each row and column of the distance matrix corresponds to a different node in the tensor network.

Optionally the Tensor network comprises a Matrix Product State, MPS.

Optionally, the method comprises, for a second node-qubit mapping that is different to the first node-qubit mapping: A) performing a first calculation using at least: i) a first value associated with a number of the node connections between the first node and the second node; and, ii) a second value associated with the first interaction strength; B) performing a second calculation using at least: iii) a third value associated with a number of the node connections between the first node and the third node; iv) a fourth value associated with the second interaction strength; wherein the second and fourth values are different non-zero values; C) selecting the first node-qubit mapping for use in the emulation from a group of at least: the first node-qubit mapping, the second node-qubit mapping; by comparing: at least one of the values of the results of the first and second calculation for the first node-qubit mapping; with, at least one of the values of a result of the first and second calculation for the second node-qubit mapping.

Optionally, the second node-qubit mapping comprises a node-qubit link wherein at least one of the first, second or third qubits is linked to a different node to the node linked to that same qubit in first node-qubit mapping.

**EP 4 579 542 A1**

Optionally, the method comprises: A) selecting the maximum value from a first group of: a value of the result of the first calculation for the first qubit mapping; a value of the result of the second calculation for the first qubit mapping; B) selecting the first node-qubit mapping for use in the emulation based on the selected maximum value.

Optionally, the method comprises: A) selecting the maximum value from a second group of: a value of the result of the first calculation for the second qubit mapping; a value of the result of the second calculation for the second qubit mapping; B) selecting the first node-qubit mapping for use in the emulation based a comparison of the maximum value of the first group to the maximum value of the second group.

Optionally, the comparison is for finding the minimum value from the: maximum value of the first group, maximum value of the second group.

Optionally, the quantum computation is an analogue quantum computation.

Optionally, the quantum computation comprises a computation using a neutral atom quantum computer.

Associated with the second aspect there is presented: a system comprising a computer processor for emulating, using a tensor network, a quantum computation; the quantum computation comprising a plurality of qubits; the tensor network comprising: a plurality of nodes; a plurality of node connections for connecting the plurality of nodes; the plurality of qubits comprising at least: a first qubit, second qubit and third qubit wherein: a first interaction strength is associated with the interaction between the first qubit and the second qubit; a second interaction strength is associated with the interaction between the first qubit and the third qubit; the computer processor, for a first node-qubit mapping comprising a plurality of node-qubit links for linking each node to a different one of the plurality of qubits; configured to: A) perform a first calculation using at least: i) a first value associated with a number of the node connections between the first node and the second node; and, ii) a second value associated with the first interaction strength; B) perform a second calculation using at least: iii) a third value associated with a number of the node connections between the first node and the third node; iv) a fourth value associated with the second interaction strength; wherein the second and fourth values are different non-zero values; C) select the first node-qubit mapping for use in the emulation based on at least one of: a result of the first calculation for the first node-qubit mapping; a result of the second calculation for the first node-qubit mapping; D) emulate the quantum computation using the first node-qubit mapping.

The system may be adapted according to any feature herein including but not limited to any of the options presented for the method of the second aspect.

Brief description of the figures

Figure 1a shows an example of different methods for solving graph problems;

Figure 1b shows a detail of a prior art method of solving a graph problem on a quantum computer;

Figure 2 shows an example method of outputting a control signal for use by a quantum computer;

Figures 3a-3d show example ways of deriving qubit distances from graph data;

Figure 4 shows an example of determining two graphs, from an initial graph, for determining qubit positions;

Figure 5 shows an example of an output graph for representing an amorphous solid;

Figure 6 shows an example of results using the method;

Figure 7 shows a comparison between prior art and the present method;

Figure 8 shows desired distributions of nearest neighbour nodes for a centrally considered node;

Figure 9 is an example of a prior art mapping of qubits to nodes in an MPS tensor network;

Figure 10 is an example of a method for emulating a quantum computation;

Figures 11a-d show examples of four different node-qubit mappings for the same quantum system;

Figure 12 shows the gap between RCM and the method presented herein;

Figure 13 shows the average ILP and RCM bandwidth in function of Gap tolerance;

Figure 14 shows an example of a quantum computing system;

Figure 15 shows an example of a quantum computing system;

Figures 16a-c show example of energy level transitions;

Figures 17a-b show the Rydberg blockade.

Detailed description

There is presented a computer implemented method for determining a plurality of different spatial positions for a plurality of qubits. The plurality of qubits are associated with a graph. The graph comprising a plurality of vertices and a plurality of edges wherein each of the qubits corresponds to a different vertex.

The positions may be used in a computation associated with the qubits. For example, the computation may encode the graph and, when executed, may provide one or more solutions to a graph problem for the graph. Such a computation may be an emulation of a quantum computer wherein the emulation is run on a classical computer, for example using a tensor network model. Additionally, or alternatively the computation may be a quantum computation using a quantum computer. The method may optionally be used to develop a Hamiltonian. Additionally, or alternatively the method may use the spatial positions to generate a control signal for operating a quantum computer.

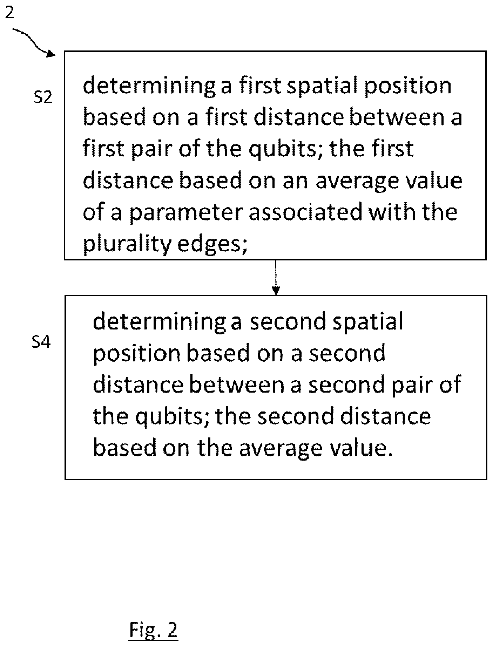

Figure 2 shows an example of the method 2. At step S2, the method 2 determines a first spatial position of one of the qubits based on a first distance between a first pair of the qubits; the first distance based on an average value of a parameter associated with the plurality edges. 2. At step S4 the method determines a second spatial position of a different qubit based on a second distance between a second pair of the qubits. The second distance is based on the average value. Steps S2 and S4 may be performed in any order, or simultaneously or at least partially overlapping in time. The first pair of the qubits comprises at least one different qubit to the second pair of the qubits. The second spatial position is a different spatial position to the first spatial position. The spatial positions may optionally be encoded into a graph or other data set for use with other methods and systems herein such as methods and system using a tensor network. The parameter that the method uses an average value of, may be one that relates to data used for defining the graph. For example, the parameter may be data defining the values for a type of edge (or other data type) in another related graph. Thus, the edge values of the graph under consideration by the method may be associated with a data set from which the average value is determined. The average value of the parameter may be a parameter itself.

The method Is now explained in more detail using a simple non-limiting example. The graph in this example is a graph representing people in a social network wherein each qubit represents a person in the network. The edges of the graph represent the strength of that connection, for example number of emails exchanged between them over a time period. The method in this example is provided a value representing the average strength of the connections between different people-pairs. For this example, let us use a value of 4 for the average strength. In the graph, that is to be further used in a computation to solve a graph problem, there are several people including person A, person B and person C. In this example there is no underlying lattice for defining the vertex positions, as such the method is free to determine where the spatial positions are and is not restricted to a certain position or small sub-region of the total space available (for all the qubits), for each qubit.

Person A is directly connected to person B and C. Persons B and C are not directly connected. Qubit A represents person A. Qubit B represents person B. Qubit C represents person C. The average strength value is used in the determination of both: the distance between qubits A and B and the distance between qubits A and C. This determination may be done in any suitable way wherein the end distance is a function of the average strength. The positions of the qubits B and C from qubit A are then determined from their corresponding distances from qubit A. For instance, the method may determine that the magnitude of the distance qubit B is from qubit A is the same as magnitude of the distance qubit A is from qubit C.

Alternatively, the method may use the average strength plus a random value within a threshold, for example half of the standard deviation of the average strength, to determine the qubit distances. Let us say half of the standard deviation is 0.25. In this latter instance, the person-person connection strength used to determine the qubit A-B distance is the average strength 4 + the random number of 0.1 (which is within half of the standard deviation is 0.25). Conversely, the person-person connection strength used to determine the qubit A-C distance is the average strength 4 + the random number of 0.2 (which is within half of the standard deviation is 0.25). The qubit-qubit distance magnitudes are thus different between qubits A-B to qubits A-C. The final positions of the qubits are determined and may optionally be stored in a memory. A computation may then be run using those qubit positions, for example running a problem such as MIS (Maximum Independent Set) or MAXCUT for the graph represented by the qubits. MIS and MAXCUT are only examples of problems that may use qubit layouts determined by the method. Other problems may be used such as, but not limited to, any NP hard problem.

Thus, unlike previous methods of determining qubit positions, the method uses an average of the edge values to determine the distance between qubits. Prior art methods of generating qubit positions based off one or more input parameters require the storage, and use in calculation, of separate values for each qubit-qubit pair. Conversely, by only needing to use, at minimum, a single average value to determine multiple qubit-qubit distances, the present method may perform fewer computing calculations to determine distances and furthermore needs to store less data to define the qubit positions for the whole graph.

The method may optionally determine the average value or other values used to determine the qubit-qubit distances. For example, a different but related graph may be provided to the method to derive the average value from, and optionally other values to determine the qubit pair distances and the number of nearest neighbour qubits. The related graph may a sample of a similar (but different) social network to the social network being defined by the method via the qubit positions. The related graph may have, for example, 8 people and 26 connections in total between them wherein the connections have a variety of different connection strengths. The method may take an average (for example a mean average) of all the 26 different connection strengths of the related graph and use the average to define the distances between the qubits representing the nodes in the graph intended to be executed. In principle, any related graph may be used and may comprise three or more vertices and at least two or more edges, wherein each edge comprises an edge value.

The above social network examples have used a single average value to define all the qubit-qubit positions in the graph, however the method may be applied to graphs where only a subset of the qubit-qubit distances are determined in this manner. Furthermore, multiple average values may be used wherein each average value is used to determine distances between different qubit-qubit pairs.

An example of this usage is developing a graph representing an amorphous solid. The amorphous solid graph is for implementation on either a quantum computer comprising the qubits or for a classical computation emulating the qubits (for example using a tensor network). In this amorphous solid example, the computation is for investigating a property of the amorphous solid when the amorphous solid has a large extent, for example 300 atoms. As such, the computation in this example uses 300 qubits. The amorphous solid has three types of atoms, A, B, C wherein atom-atom bonds only may exist between: atoms A and B; and atoms A and C. No bonds exist between B and C. Bond strengths between similar atom pairs are known to change in practice and a small sample of only 15 atoms is presented to a user to derive the qubit distances for all the 300 qubits.

The user, or the present method, may then determine the average bond strength between all the A-C atoms in the small sample as well as the average bond strength between all the A-B atoms in the small sample. The standard deviations of both of those averages are also determined. The method then allocates each of the 300 qubits to one of three qubit sets, set A, set B, set C. Each set having a plurality of qubits. Each set represents a different atom type. The method then establishes a plurality of connections between the 300 atoms such that qubits from set A are edge connectable to qubits from sets B and C whilst qubits from set B are edge connectable to qubits from set A only; and qubits from set C are edge connectable to qubits from set A only. The distances between the qubits represent the edges of the graph, which in turn represent the strength of the atom bonds in the amorphous solid being investigated by the computation.

Each of the distances between qubit pairs assigned a graph edge are determined using the appropriate average value. In other words: distances (representing graph edge connections) between A-type and B-type qubits are determined using the average value of the bond strength between the A-B atoms in the small sample; whilst distances (representing graph edge connections) between A-type and C-type qubits are determined using the average value of the bond strength between the A-C atoms in the small sample. Each qubit-qubit distance may also use the associated standard deviation value as well, for example each qubit-qubit distance may be determined from the associated average bond strength plus a random number value within half the standard deviation for that average.

Optionally, the number of edge connections for a particular qubit may be derived from input data parameters, for example from the small sample. It may be ascertained that the average number of B atoms that an A atom bonds to in the sample is 2 but the average number of C atoms an A atom bonds to is 3. Standard deviations of such averages may also be generated and used by the method as well. Such average values (and optionally standard deviations) may be used to determine the number graph edges a vertex connects to in the graph, hence the associated qubit-qubit distances.

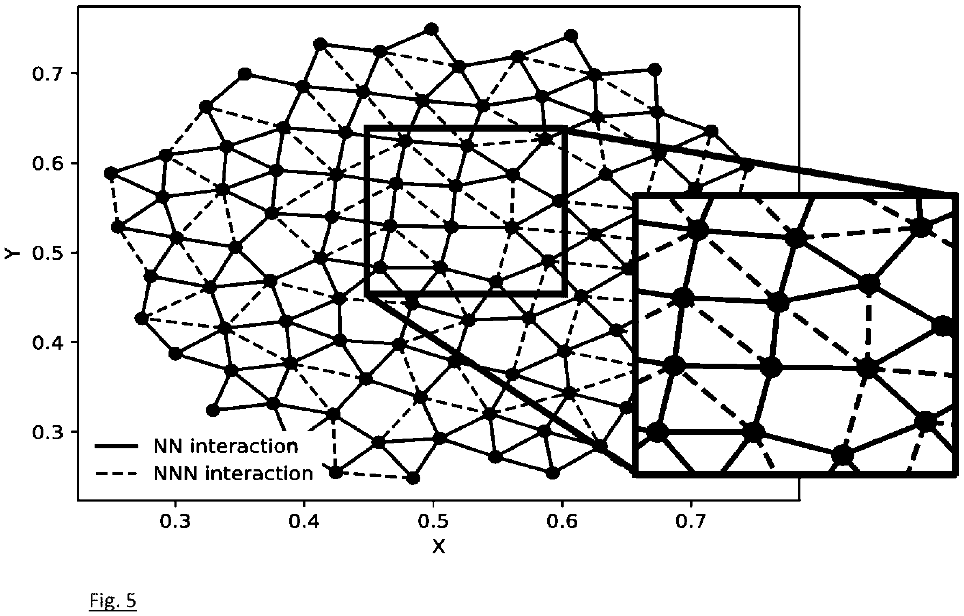

Thus, in this amorphous solid example, the method allows for a large 300-atom amorphous solid to be modelled in a computation without needing measurements of large real samples of the same amorphous solid. Figure 5 shows an example of an output graph of an amorphous solid modelled by the present method wherein NN denotes nearest neighbour interactions and NNN denotes next nearest neighbour interactions.

The above examples are merely intended to exemplify the method and the above teachings about how the method may be implemented are not limited to the end applications used or the values chosen. Such teachings may be used in the method in general. The inventors of the present application have therefore realised that for some applications one can use an average value to define qubit distances instead of having each qubit position derived from separate input data for each qubit. The ways in which the method determines the qubit spatial positions and distances may vary including using loss functions, as discussed in examples elsewhere herein.

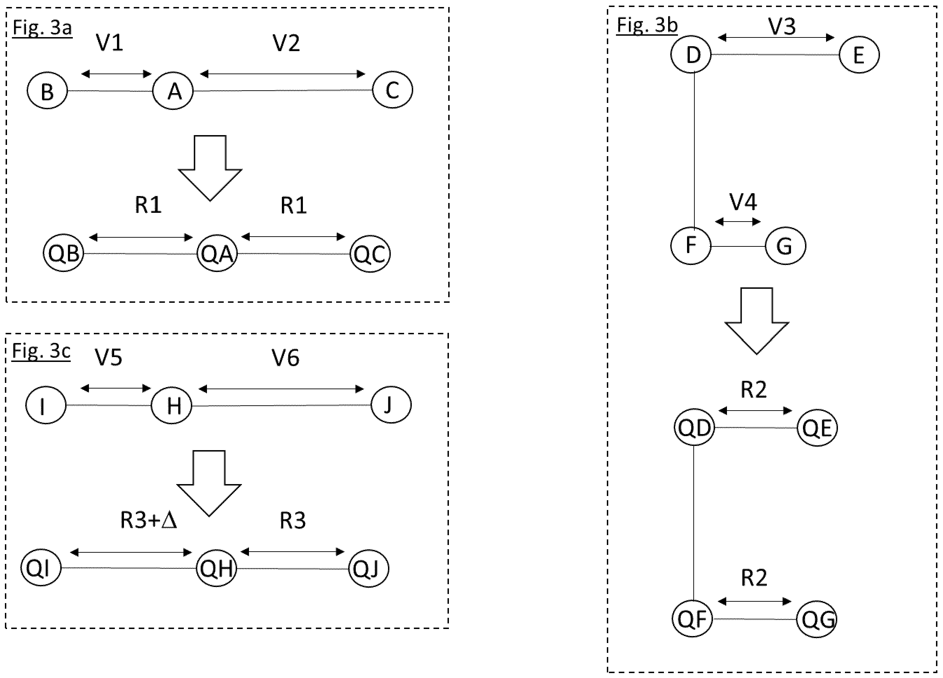

Turning back to the method of figure 2. Determining an average value, within the method, and using it for defining qubit positions in the register may be accomplished in different ways. Several of those ways are exemplified below in figures 3a-3d, however these exemplified ways are not exhaustive.

Figure 3a shows an example where the problem involves a graph with three nodes A, B, C. Each node is represented by a respective qubit QA, QB, QC. In this example, and the examples in figures 3b-3d, the method is presented with initial values 'V' for the edges, derives an average value and then uses that average value to determine qubit distances. In principle the average values 'V' of the edges may already be known and provided as an input parameter to determine the qubit pair distances. The initial graphs having different nodes and edge values 'V' in figures 3a-3d may be a sample graph used to derive the average values from in order to implement the qubit pair distances. Optionally the method may generate an intermediate graph that is then used to derive the qubit pair distances wherein the intermediate graph encodes the average value into its edges.

In figure 3a, the graph has an edge between nodes A and B having edge value V1. The graph has an edge between nodes A and C having edge value V2. The length of the two edges in figure 3a are unequal and are intended to visually represent V2 being a larger value than V1. The method uses the mean average of V1 and V2 to determine the distance R1 that is used to space apart: qubit QB from QA; and qubit QC from QA. In this example, the distance for internally spacing qubits pairs is the same distance. Thus, in general, the method may take two (or more) different edge values in related graph data, derive an average value, and use the average value to generate equal distances for at least two qubit pairs in the register. This method uses a mean average, however other averages such a mode-average may be used. For example, node A may be connected to four other nodes with edge values 4, 4, 4, 1; an edge value mode-average of 4 may be used for determining the all four qubit-qubit distance 'R' for the neighbouring qubits to qubit A. Such other averages may be used as an alternative for any example herein.

Figure 3b shows an example where the problem involves a related graph with four nodes D, E, F, G. Each node is represented by a respective qubit QD, QE, QF, QG. The related graph has an edge between nodes D and E having edge value V3. The graph has an edge between nodes F and G having edge value V4. The length of these two edges in figure 3a are unequal and are intended to visually represent V3 being a larger value than V4 in the data used to derive the average value. The graph has an edge between nodes D and F that has a value not shown in the figure. The method uses the mean average of V3 and V4 determine the distance R2 to space apart: qubit QE from QD; and qubit QG from QF. In this example the distance for internally spacing qubits pairs is the same distance, however only two of the three edges, hence edge values of the related graph of input data, are used to determine the positioning value. Thus, in general, the method may use a subset of the input data to derive the average value.

Figure 3c shows an example where the problem involves a graph with three nodes H, I, J. Each node is represented by a respective qubit QH, QI, QJ. The related (sample) graph has an edge between nodes H and I having edge value V5. The related graph has an edge between nodes H and J having edge value V6. The length of these two edges in figure 3a are unequal and are intended to visually represent V6 being a larger value than V5. The method uses the mean average of V5 and V6 as to determine the distance R3 that is used to space apart: qubit QE from QD; and qubit QG from QF. In this example the distance between QH and QJ is R3, but the distance between QI and QH is R3 plus a further value $\Delta$. Thus, in general, the method may use the average value and one or more other values to determine the distance between qubits.

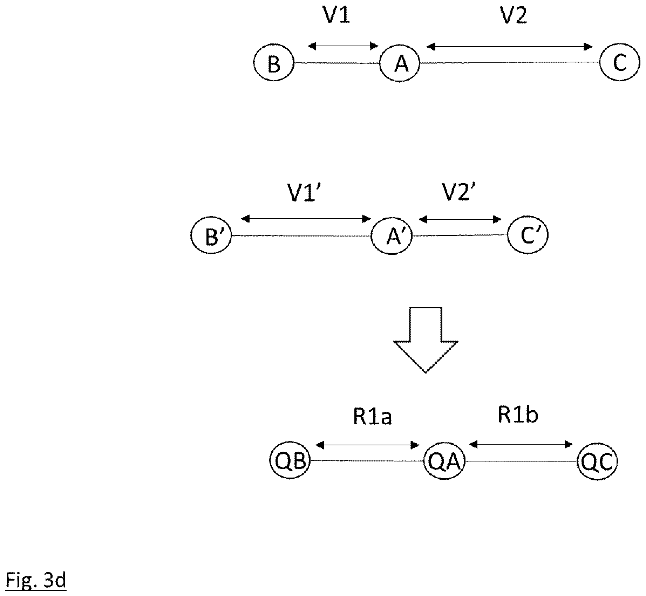

Figure 3d shows an example where the problem involves two initial sample graphs. The first sample graph is at the top of figure 3d and has three nodes A, B, C with edge values V1 and V2 similar to figure 3a. The second sample graph is shown immediately underneath the first graph in figure 3d and has three nodes A', B', C' with edge value V1' between A' and B' and edge value V2' between A' and C'. The length of the two edges in each of the first and second sample graphs are unequal and are intended to visually represent V2 being a larger value than V1 and V1' being larger than V2'.

Nodes A and A' are represented by qubit QA. Nodes B and B' are represented by qubit QB. Nodes C and C' are represented by qubit QC. The method uses the mean average of V1 and V1' to determine the distance R1a that is used to space apart qubit QA from QB. The method further uses the mean average of V2 and V2' to determine the distance R1b that is used to space apart qubit QA from QC. In general, the method may determine positioning values using edge values from a plurality of sample graphs.

The examples shown in figures 3a-3d therefore show different ways in which input data can be used to generate an average and how the qubit-qubit distances can be determined using that average, and optionally other data values too. As discussed above the average value and other values such as standard deviations may be pre-calculated or predetermined and provided to the method for use in determining qubit pair distances.

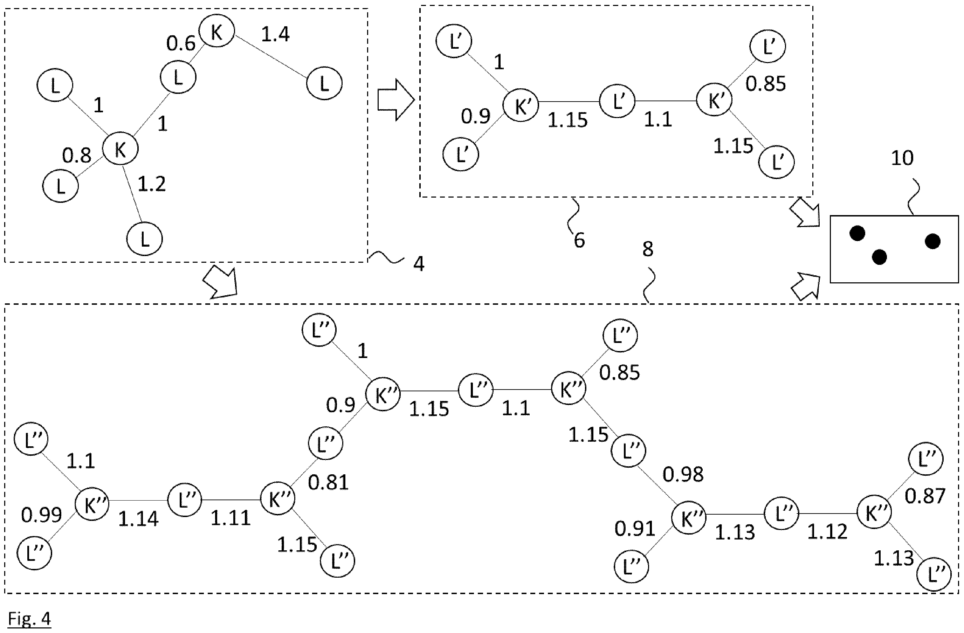

Figure 4 shows a further example of using the method and uses an initial sample graph 4. The graph 4 has two sets of nodes. Each set comprises a plurality of nodes wherein the nodes in each set are different to the nodes in the other set. The first set of nodes are labelled 'K'. There are two K nodes in this example although one or more nodes per set may be used. The second set of nodes are labelled 'L'. There are five L nodes in this example. The K nodes are connected by one edge to an L node. K nodes do not directly connect to each other via a single edge. L nodes do not directly connect to each other via a single edge.

In this example, a plurality of parameters are used to determine qubit positions in the register, hence qubit-qubit distances. A first of the parameters is derived from an average of a plurality of edge values in the sample graph (in this example a mean average). A second parameter is the standard deviation of that mean average. A third parameter is a value giving the average number of edges from a K node to its connected L nodes in the sample graph; i.e., an average of the number of edge connections from a K node. A fourth parameter is the standard deviation of the above derived average number of edges. These four parameter types or any subset of these four parameter types may be used for other examples herein.

In the graph 4, one K node is connected to four of the five L nodes with edge values 0.8, 1, 1 and 1.2 respectively. The other K node is connected to two of the five L nodes with edge values 0.6 and 1.4 respectively. One of the L nodes is connected to both K nodes. The method determines the four parameters as follows.

For the first parameter. The edge value average is 1. In other words, the average of all six edge values (0.6, 0.8, 1, 1, 1.2, 1.4) is 1.

For the second parameter. The standard deviation (STD) of the same six edge values is 0.316. This value may be determined using any process including that of available STD solvers.

For the third parameter. The average number of L connections from a K node is 3. In other words, one K node has 4 connections, the other has 2, the average is therefore 3. The mean average is used in this example.

For the fourth parameter. The STD of the number of L-node connections from a K node is 1.4.

The method then uses the above four parameters to determine two different register configurations, although one or more register configurations may be derived. In this example the method generates two further graphs 6, 8, using the four parameters. The further graphs 6, 8 are the graphs the method intends to be solved using either an emulation or a quantum computation. Each of the further graphs 6, 8 are related to the original sample graph 4 via the four parameters. Each further graph 6, 8 is then encoded into qubit positions for a different register 10 in a quantum computer, in other words, the first graph 6 is used to determine a first set of qubit positions in a first register 10 whilst the second graph 8 is used to determine a second set of qubit positions in a second register 10.

Figure 4 shows a single item 10 depicting the values for implementing qubit positions in a register, however it should be appreciated that each graph 6, 8 gives rise to a separate set of values for determining the number of qubits and qubit positions. Furthermore, the representation of the register 10 in figure 4 is not intended to represent a particular number of qubits and is only a general pictorial representation.

Both further graphs 6, 8 are used to generate the qubit registers using the following considerations. The number of L nodes each K node is connected to is derived using the third and fourth parameters. A value of half of the STD of the number of L node edges was used as a modified fourth parameter to use in the calculation, which was 0.7. The number of L nodes each K node connects to was derived from the value of the third parameter, plus or minus the value of the modified fourth parameter. This gives 3 +/- 0.7. Given the number of L nodes to connect to takes a unitary value, the number of L nodes each K node connects to is 3. The edge strength is determine using the first and second parameters. A value of half of the STD of the edge values was used as a modified second parameter to use in the calculation, which was ~0.16. The edge strengths were derived from the value of the first parameter, plus or minus the value of the modified second parameter, which was 1 +/- upto 0.16. For each node in each further graph 6, 8, the edge value was calculated as 1 +/- a random number between 0 and +/- 0.16.

For the first qubit register configuration derived from the first graph 6, there are two K nodes and five L nodes. In the graph 6, each K node is connected by an edge to three L nodes. Each of the edges conforms to the edge strength rule derived above as 1 +/- a random number between 0 and +/- 0.16. Thus, the edge values in this first graph 6 are 0.9, 1, 1.15, 1.1, 1.15 and 0.85. In this example the first graph 6 was developed by manually selecting that the number of K nodes was 2.

For the second qubit register configuration derived from the second graph 8, there are six K nodes and thirteen L nodes. In this example the second graph 6 was developed by manually selecting that the number of K nodes was 6. Each of the edges conforms to edge strength rule derived above as 1 +/- a random number between 0 and +/- 0.16. Thus, the edge values in this second graph 8 are 1.13, 0.87, 1.12, 1.13, 0.91, 0.98, 1.15, 0.85, 1.1, 1.15, 1, 0.9, 0.81, 1.15, 1.11, 1.14, 1.1, 0.99.

Thus, in general, the method may determine one or more further graphs from an initial graph wherein the further graphs comprise at least one different edge value than the initial graph. These further graphs may be used to encode the qubit positions and optionally, the number of qubits to use in the quantum computer. Optionally, the method may determine one or more, in some cases all, edge values using a random value. The random value may be derived from the initial graph 4. The initial graph 4 may be used to determine one or more thresholds that the edge values in the further graphs abide by. The thresholds may be used to determine the maximum and/or minimum values that an edge value may take. The thresholds may be derived from a standard deviation. The standard deviation may be standard deviation associated with a mean average value of edge values in the initial graph 4. Additionally, or alternatively, the method may determine a statistical profile of edge values of the problem graph 4 and determine the edge values of one or more further graphs 6, 8 based on the profile. For example, the variation of edge values in the initial graph 4 may take a gaussian probability distribution or other probability distribution and therefore the method may randomly determine edge values of the further graphs using that probability distribution.

The method may determine the number of vertices, hence qubits to use, by any one or more of: a) an average number of other vertices that a given vertex connects to; b) the number of vertices of a particular type; c) a random value, d) another parameter determining vertex numbers such as but not limited to maximum number of vertices in the graph. When using a random value, this may be determined in a similar manner to the random edge values as described above wherein a standard deviation may be used to set one or more thresholds and/or a statistical probability profile of number of edges may be used.

In the above examples of figures 3a-3d and 4 the method can derive one or more qubit positioning parameters from the initial graph and use those parameters to generate qubit positions in a register. Generally, the method may derive one or more further graphs from these parameters that in turn get encoded into qubit positions. Additionally, or alternatively, the method may simply derive qubit positions from the said parameters without needing to form further graphs.

In the examples described above there are shown related or 'sample' graphs from which an average value is derived for use in generating the qubit positions, wherein an optional intermediate graph may be made to derive the qubit positions from. As discussed elsewhere herein the requirement for the method to determine the 'average value' is optional and in some circumstances the method may be provided the average value related to the graph edges to use (and optionally other values such as standard deviation of the average value; the average number of nearest directly connected nodes and its standard deviation).

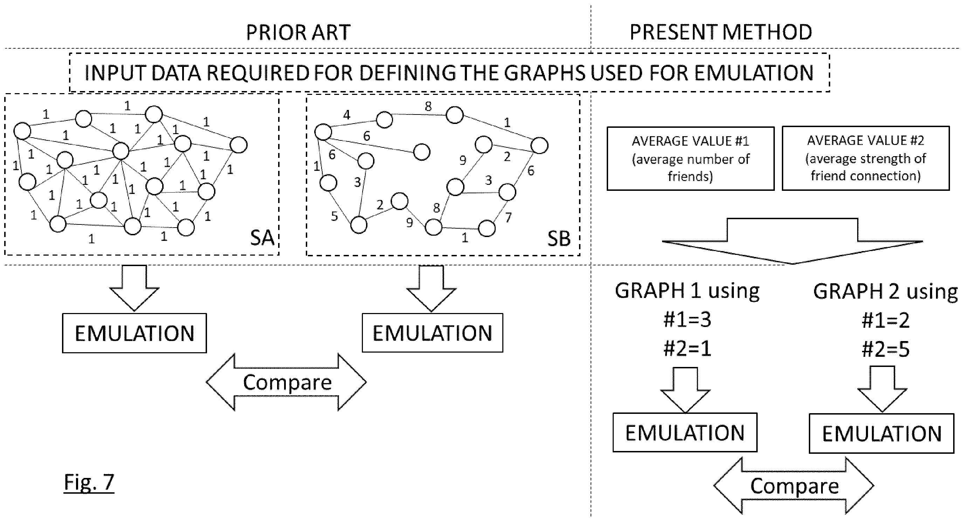

In figure 7 we show a further example comparing a prior art method of solving a problem and the same problem being solved using the method described herein. In this example the average value used to determine the qubit-qubit distances, hence spatial qubit spatial positions, is provided to the method. The figure shows what the prior art would do on the left and what the present method may do on the right.

In this example the problem required to be solved is regarding the differences between two types of social network. The first social network is a social network where everyone has many friends and a low interaction per friend. The second social network is where everyone has few friends but has high interactions per friend.

The prior art process would firstly take samples of real-life social networks of these two types, for instance at least one of each type. The figure shows this by the prior art method needing to store data for a real example 'SA' of the first type of network. In the SA network each circle represents a person (node in the sample graph) and the line connections between the people indicate social connections wherein the number next to the connecting edge is the connection strength. As shown, several people have multiple friends for the SA sample network, but each connection only has a strength of 1. Conversely, the prior art method also takes a second sample 'SB' of the second type of social network. The picture of this network sample SB is similar to that of the first network sample SA, but there are fewer people meaning that each person has less friends, however the strength of a large majority of the connections between friends (nodes) is larger than the connections in SA.

The prior art encodes each sample, SA, SB into its own separate graph that is used to determine the qubit positions for a respective qubit register. Each qubit register (one for SA, one for SB) is then emulated using tensor networks. The results of the emulations are compared to identify the differences.

On the right-hand side of the figure the present method does not need the full input data of two fully sampled networks SA and SB. Instead, to generate each graph representing the two types of social networks, the method simply inputs two types of average value. Namely: average value #1 = the average number of friends each person has, hence the average node connections in the graph per node; average value #2 = the average value of the edge connection strength. In the figure the method generates two different graphs wherein one graph uses #1=3 and #2=1 whilst the other graph uses #1=2 and #2=5. These two graphs are then emulated, and a comparison is made between the results. As this example shows, the present method allows for a simplified way of generating graphs for emulation, or quantum computer simulation of graph problems. Aside from the total number of nodes, only two pieces of data are required to generate the graphs in the present method whilst the prior art requires real samples comprising many, possibly thousands or millions of input data values to generate the qubit positions.

In general, using an average of a plurality of edge values to determine qubit positions provides several advantages. Firstly, there may be less data needed to define the qubit positions than if the problem graph were directly encoded into equivalent qubit positions as in the prior art shown in figure 1b. In other words, multiple qubit-qubit distances may be set to the same value arising from using the same average edge value. This may lead to more efficient use of computer memory for storing the data defining the register. Equally with less data comes less communication signal bandwidth required to send a control signal to equipment for setting up and running a quantum computer. This benefit becomes increasingly apparent when large numbers of qubits share the same qubit-qubit distance derived from the same average edge value. It is noted that this method may also be used for providing a control signal for an emulation of a quantum process rather than used for a quantum computation. Examples of methods performing an emulation, in particular using a tensor network are described elsewhere herein.

The methods described above using an average value for qubit-qubit distances, and represented by figures 1a, 2, 3a, 3b, 3c, 3d, 4 may be used in conjunction with other methods described herein relating to tensor networks. In particular these 'average edge value'-type methods may be used to generate input nodes and edges for the methods relating to tensor networks.

Secondly, the quantum computer can be set-up to find solutions corresponding to average properties of the system presented in the solution. This may become particularly advantageous if, say, the problem related to a system whereby the connections between different elements of that system were varied. For example, an amorphous solid may be represented by a graph wherein atoms are vertices and edges are distances between atoms in the amorphous structure. A section of amorphous solid that may be of interest to solve on a quantum computer may normally need to be a large one if it were encoded as per the prior art in figure 1b because a large number of 'nodes' may be required to implement all the different atom positions allowed for in the amorphous solid. Such a direct implementation of the initial graph problem would be expensive to run from a time and resource point given the number of qubits required. Furthermore, generating an ab initio model of an amorphous solid is difficult. If, however, the method presented herein were used then the average of those atom-atom positions (in the amorphous solid) could be used to encode the qubit-qubit positions. As such, a smaller number of qubits may be needed to represent the amorphous solid. A similar advantage may be present for other application example for instance social networks.

Conversely, if so desired, the user of the present method may increase the number of qubits compared to directly encoding the problem as per figure 1b. An example of using this approach would be, say, if a person were given a small sample of amorphous material similar to the graph 4 in figure 4. If the problem to be solved relating to the amorphous solid required considering a greater extent of the material than provided by the small sample, then direct value encoding prior art methods such as figure 1b would require many further samples of the same material to be analysed to give a faithful representation of the atom positions. However, the present method may simulate (via using a quantum computer, or a quantum emulator) a larger extent of the material by including more qubits representing further atoms beyond the extent of graph 4 and use the average edge value to position those qubits.

Thus, in general, the present method uses one or more statistical properties (of an initial system that relates to the problem), to determine qubit positions. Examples are given throughout this disclosure of amorphous solids as an application of the method, however other end applications are possible including other graph-related problems such as problems involving social networks where people are represented by graph vertices and the edges values between vertices denote the strength of relationship between them. References throughout to a qubit register are referring typically to a neutral atom quantum computer run in an analogue mode of operation, however a digital mode of operation may be used to implement the method. Furthermore, the method may be run on other physical forms of quantum computer including a trapped ion quantum computer. Equally, the method may be used for determining a data signal for inputting into a quantum computer emulator to find a solution to the problem. For purposes of clarity, a quantum computer emulator is intended to mean a classical computer running a model that emulates the operation of a quantum computer. The examples presented in figures 3a-d and 4 are intending to show examples of how the method may be used wherein teachings from each example may be applicable to other examples herein and to the method in general.

<u>Using optimisation methods</u>

The method may use an optimisation method to determine the qubit positions. In general, an optimisation routine may start by generating a starting graph with a number of qubits each representing a different graph vertex (or 'node'). The starting graph may have its nodes in a random or semirandom position or in a position at least partially determined by a user.

A function or set of calculations are typically used in the optimisation routine to guide the repositioning of the nodes to a final node position of a final graph wherein the final graph is used to determine the qubit positions used in a quantum computation or quantum computer emulation. The routine may use a single repositioning or multiple repositioning of the nodes (in an iterative manner) before a final graph is output. In an alternative, the routine may directly calculate the qubit positions and dispense with the need to generate an intermediate graph to derive the qubit positions from. When performed in this manner the 'average value' used in the following discussion refers to the average value of the qubit-qubit distances.

For each graph generated using the optimisation (referred to as a 'graph instance') a value is generated for the graph instance using one or more of the following criteria underneath. After determining this graph instance value, the method may compare it to a further acceptance criteria to determine whether the qubit positions represented by the graph are for use in a further computation. This further acceptance criteria may be a threshold value and may allow one or a plurality of graph instances to be used for a further computation by an emulator or a quantum computer. The criteria to be used for each graph instance to determine the value are as follows:

a) The difference between the average edge value (provided as an input parameter to the optimisation) and the value of an edge in the graph instance. This may be determined for one edge, a plurality of edges, a subset of all the edges or all of the edges in the graph instance. The larger the difference, the more the graph instance is away from an optimum layout for that given edge, hence qubit pair position. This determination may be made for any number of the nodes, preferably all nodes.

b) The difference between the average of multiple edge values in the graph instance and the average edge value (provided as the input parameter to the optimisation). For example, for three graph nodes connected in a linear line similar to figure 3c, the method may determine what the two inter-qubit distances are, take an average of those distances and compare the result to the input average edge value. This determination may be made for all qubit-pairs in the graph instance, for example all nearest neighbour qubit pairs wherein the determination as to whether another node is a nearest neighbour may be determined using any example herein.

c) The number of other nodes within a particular distance from a particular node (referred to for discussion purposes as the central node). For example, the method may define a desired number of nearest neighbour nodes for a particular node. This determination may use a minimum and maximum distance value from the central node and determine how many other nodes are within this range. This number of other nodes in the range is compared to an input parameter of the average value of the nodes within this range. The range may be represented by a set of two different radius concentric circles centred on the central node, akin to a donut. Other ways of defining the range may be used including using a Gaussian distribution described in examples underneath. This determination may be made for any number of the nodes, preferably all nodes.

d) In any of the above a)-c) a standard deviation value associated with the average value may be used in the calculation. For example, the determined values of the graph instance may be compared to the average value plus or minus a value associated with the standard deviation (such as half of the standard deviation).

e) A condition that sets a minimum distance that any node can be away from another node. A further condition may be used to determine a maximum distance a node can be from any other node (for example to make sure a qubit is not left far away and isolated from any other qubit).

When certain conditions are unsatisfied, such as condition e) or c) then the routine may penalise the graph instance. For other conditions such as a) or b) the penalty may vary depending on how far away calculated value for that condition is away from the average value input parameter.

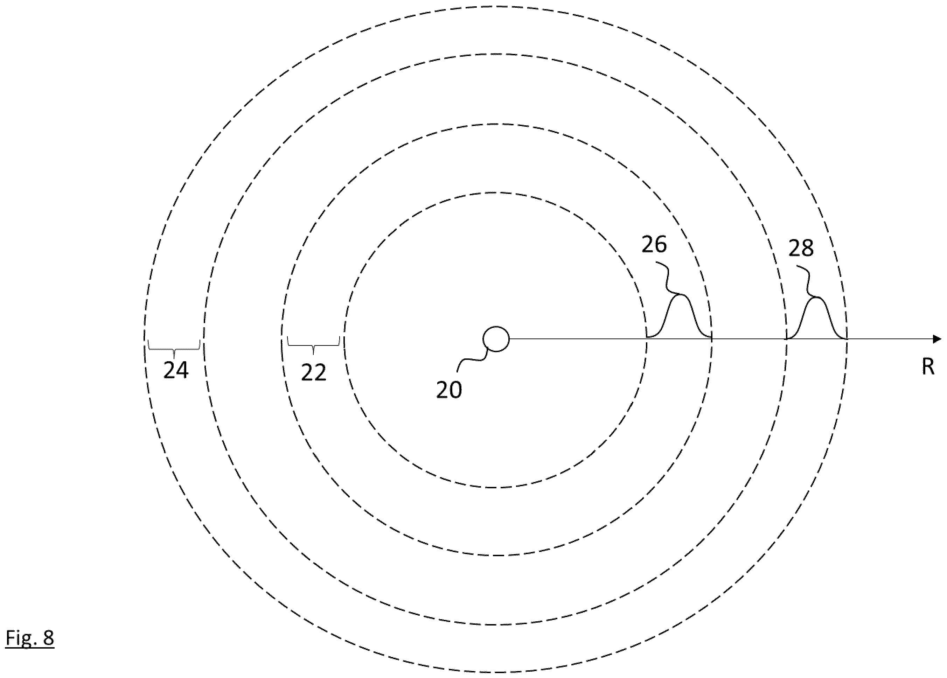

Figure 8 shows an example of how the method may determine whether another node of the graph is a nearest neighbour node for a particular node. In this figure only a single node 20 is shown, however it is to be appreciated that the same considerations may be made for multiple nodes in the graph, preferably all nodes in the graph. The figure only shows a 2D depiction of where other nearest neighbour nodes may reside by showing two sets of ring-like areas 22, 24 defined by a pair of concentric circles centred on the central node 20. The method may use a 3D version, for example using shells surrounding the central node. In other examples these 2D rings may be referred to a 'donuts'. Each ring, or 'region', 22, 24 covers a different region of space than another of the regions 22, 24. In figure 8 each region 22, 24 is also spaced apart from another of the regions 22, 24, however they could be immediately adjacent and bordering each other. Figure 8 shows two rings 22, 24 however one ring or three or more rings may be used. In figure 8 each of the rings is of constant radius and is centred on the central node 20 such that the middle radius of each ring 22, 24 exists at a different distance R from the central node 20. Each ring 22, 24 has an inner minimum radius and an outer maximum radius wherein the inner and outer radius are different with the minimum radius being less that the maximum radius. Between these different threshold radii is a statistical distribution 26, 28.

The statistical distribution 26, 28 describes optimal locality of other nodes with respect to the central node 20 for a given node-neighbour type. For instance, distribution 26 is the distribution, in space, of potential positions about the central node, 20 where another node can be considered to be a nearest neighbour. Similarly, distribution 28 is the same for the next nearest neighbour. The method may use one or more of these distributions to determine whether a graph is usable as the graph for further simulation or emulation. Additionally, or alternatively, the method may use one or more of these distributions to determine whether a graph is more preferred for further simulation or emulation compared to another graph. The method may do this in different ways including, but not limited to: determining how many other nodes are within the distribution; determining how optimal the position of another node is within the distribution wherein a greater suitability of another node is found the closer the other node gets to the distribution peak. The method may, for example compare the number of other nodes within the ring 22 to the desired average of number of nodes within that region and provide a score (or value) based upon the comparison. Furthermore, for each node in the region 22, the closer each node is to the peak of the distribution, the better the score is for that node. The values determined from such comparisons for each 'other' node for a particular node may be used to determine the suitability of that graph. Furthermore, such nearest node determinations may be made for each node in the graph and the total results may be used to determine the suitability of the graph for use in further emulation or simulation.

When a graph instance has been analysed using the criteria above, or with any other method herein such as the loss functions described underneath, a further calculation such as gradient based variational calculation may be made to determine the direction one or more of the qubits (or graph nodes for the next instance) need to be moved to improve the value for the graph instance, for example, the direction that one or more qubits need to move relative to each other to improve a loss function.

Further examples of using a loss function in an optimisation routine are described underneath wherein any details of these further examples are combinable with the examples above and vice versa.

The first of these further examples is for where the quantum computer is a neutral atom quantum computer run in analogue mode where the atoms transition from a ground to excited state or another transition such as a Rydberg-to-Rydberg state. As such, the method may optionally use a similar approach as previously presented by equations 1, 2 and 3 or may use a different Rydberg Hamiltonian for example the X, Y Hamiltonian as presented in equation 5:

$$H_{RYD(XY)} = 2 \sum_{i \neq j} \frac{C_3}{r_{i,j}^3} \left( \sigma_i^x \sigma_j^x + \sigma_i^y \sigma_j^y \right) + \frac{\hbar}{2} \Omega(t) \sum_i \sigma_i^x - \hbar \delta(t) \sum_i n_i$$

[Equ. 5]

wherein $C_3$ is the constant relative to the Rydberg state in transition.

The method may optionally not start with an initial model (such as the Ising model) and may derive a Rydberg Hamiltonian or other Hamiltonian describing the physics of the qubit state transitions without an intermediate Hamiltonian. Additionally, or alternatively, the method may start with a different model to the Ising model to describe the problem.

The method may be implemented by using loss function. For example, the method may use a gradient based variational method. The loss function may be calculated by a classical computer. The loss function may be configured to be minimised when the atomic positions well approximate the properties of a desired graph. This may be accomplished by using a Rydberg Hamiltonian.

One non-limiting example of a loss function is in equation 6:

$$L = \sum_n f_n\big(k_n(r_{ij}), m_{n,i}\big) + g(e^{r_{ij}})$$

[Equ. 6]

Where $\{f_n\}_n$, $g$ are functions, $r_{ij}$ is the distance between the $i^{th}$ and $j^{th}$ atom; n labels the nth nearest neighbour, $k_n(r)$ is a continuous kernel in which a mean and variance is defined; $m_{n,i}$ is the desired number of nearest neighbours of the $i^{th}$ atom.

This loss function can be understood intuitively via the following: the first term firstly defines n (one or more) radially disposed donuts centred around each atom at encoded distances (from the central atom under consideration) and widths of the donut and secondly controls the number of particles (other graph nodes) in each of these donuts; the second term controls the minimal and maximal distances that atoms can reside from one another. This loss function may be adapted, for example to not include the second term 'g(e$^{rij}$)'. Each 'donut' is defined by a distribution such as a Gaussian distribution. The gaussian distributions (or other distribution) are sequentially disposed along a radial line extending away from the atom of interest.

The choice of mean and variance of the kernel are directly linked to the interaction scaling of the device in consideration. For example, consider a graph such that the nearest neighbour interaction disorder we desire is given by a Gaussian distribution of variance $\sigma^2$ and mean $\mu$. The corresponding kernel we may choose for n = 1 may lead to a Gaussian distribution of nearest neighbour distances that has a mean $\mu^{-1/\alpha}$ and a variance presented in equation 7.

$$Variance = \left( \frac{1}{\alpha} \mu^{-\frac{1}{\alpha}-1} \right)^2 \sigma^2$$

[Equ. 7]

An output graph may result from using this loss function. The qubit distances may be determined from this graph which in turn may be used to generate a control signal for inputting to a quantum computer.

Another further example of using the method is now presented underneath. Any particular details of this method, including development and utilisation of the loss function, may be used in other examples herein and vice versa.

This example generates an amorphous solid through a gradient based variational method that is designed such that the separation of two atoms directly corresponds to their interaction strength. In particular, the method uses a continuous loss that is a function of atomic positions in which, when minimised, the output is an amorphous solid with the desired properties.

This loss function will be composed of three terms, namely: a first term that controls the average and variance in the coordination number of the solid; a second term the controls the minimum distance between atoms; finally, a term that controls the maximal difference between two atoms. By tuning these terms, we are able to readily, and efficiently, generate unique amorphous solids that each correspond to a member of a given family of materials we are interested in. It should be understood that the same principles may be applied to other non-material examples wherein other values replace atom distance in solid, for example with other distances or values related to an edge strength.

In order to verify that the amorphous solids we generate are valid we calculate the radial distribution function of our systems. The radial distribution function, $g(r)$, describes how the density of the solid varies as a function of distance, $r$, from a given qubit and can be used to calculate properties such as the coordination number of the solid. In particular, the radial distribution function for a two-dimensional material is given by:

$$g(r) = \frac{1}{\rho} \langle \sum_i \delta (r - r_i) \rangle$$

[Equ. 8]

where $\rho$ is the density of the solid prepared and the summation is taken over all qubits other than the reference qubit. For an amorphous solid it is known that the well-defined short range order results in well-defined peaks at small r, whereas at large r we have that $g(r) \sim 1$.

As a second verification that the solids generated is the static structure factor. In regular lattices the structure factor contains sharp Bragg peaks at regular intervals due to the long-range order of these materials. However, in an amorphous such peaks do not appear. In fact, we observe a circle surrounding the origin in which the radius reflects both the distribution of NN separations around the well-defined average as well as the isotropic nature of amorphous materials on average.

The loss function we use in this example is given by three terms, $L = a_1 L_C + a_2 L_{min} + a_3 L_{max}$, where each $a_i$ are constant coefficients. In particular:

$$L_C = \sum_j \left| \sum_i k(r_{ij}) - m_j \right|^2$$

[Equ. 9]

$$L_{min} = \sum_{ij} \left( 1 - \frac{1}{1 + e^{-\gamma(r_{ij} - r_{min})}} \right)$$

[Equ. 10]

$$L_{max} = \sum_{ij} \frac{e^{r_{ij} - r_{max}}}{1 + e^{-\beta(r_{ij} - r_{max})}}$$

[Equ. 11]

where, $r_{ij}$ is the distance between the $i^{th}$ and $j^{th}$ qubit, $k(r)$ is a Gaussian kernel in which we can define the mean and

variance, $m_j$ is the desired coordination number for the $j^{th}$ atom (these numbers are picked from a separate normal distribution that controls fluctuations in coordination number) and $\{y, \beta, r_{min}, r_{max}\}$ are hyper parameters.

Intuitively, the mean of the Gaussian kernel gives the desired NN separation, the variance of this kernel controls variance of the NN separation and $r_{min}$ ($r_{max}$) is the minimum (maximum) qubit separation. Given this loss function, we can a prepare an amorphous solid from the initial state given by N qubits randomly placed inside the unit square such that that no two qubits are closer than a minimum distance, $r_{min}$, from each other. We then use the PyTorch ADAM optimiser to minimise the loss.

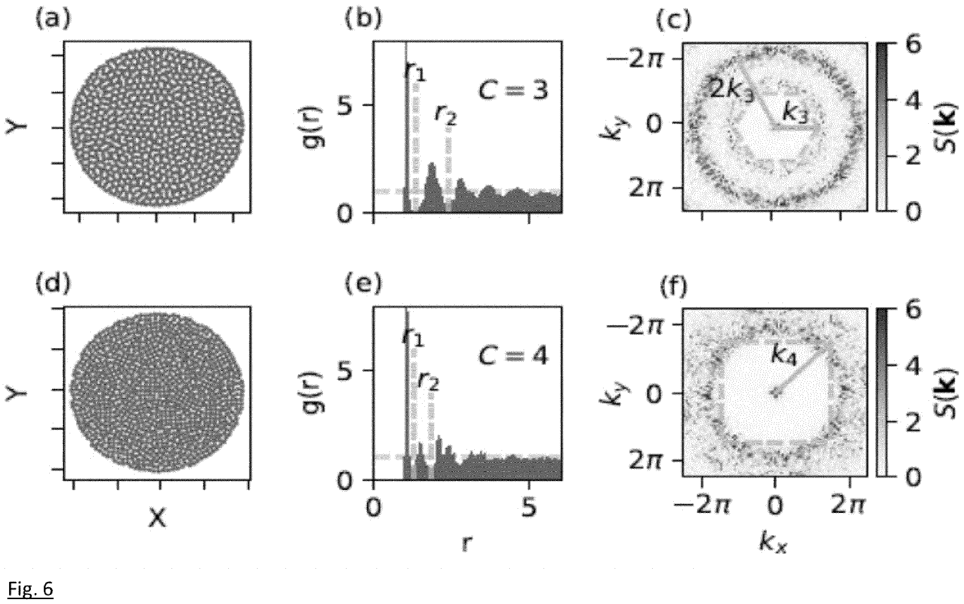

In Fig. 6(a) and (c) we present two amorphous solids generated using this method with input coordination numbers C = 3 and 4 respectively. In Fig. 6(b) and (e) we show the corresponding radial distribution functions. Note, to numerically calculate this function value you take the following steps:

1. Take a doughnut of inner radius r and outer radius r + dr around a select qubit, count the number of qubits that lay in this doughnut and normalise against the area of the doughnut.
2. Repeat this process for many (if not all) qubits in the system and average.
3. Finally, divide the qubit density of the solid such that for data with no structure we have g(r) = 1.

We see that both these radial distribution functions show clear peaks at low r which indicates the short-range order expected of an amorphous solid and g(r) ~ 1 for large r which is a result of the lack of long-range order. With a given g(r), the nearest neighbour coordination number of a solid is given by:

$$n_1 = 2\pi \int_0^{r_1} r g(r) dr$$

[Equ. 13]

where $r_1$ is the first minima in the radial coordination function. Furthermore, two atoms are considered $n^{th}$ nearest-neighbours if ri-1 < r < ri in which r0 = 0. The coordination numbers calculated for these solids are ~3 for panel (a) and ~3.9 for panel (b).

In Fig. 6(c) and 6(f) we present the static structure for these amorphous solids. In both of these plots we clearly see the expected circular pattern in the structure factor. Furthermore, we outline the Brillouin zone for the regular lattice that shares the coordination number of each amorphous material, i.e., the honeycomb lattice for C~3 and the square lattice for C~4. By ensuring that each regular lattice has the same NN separation as the amorphous solid we see that the circles radius aligns well with the edges of the Brillouin zone in both cases.

Methods relating to Tensor networks

Previously described methods related to qubit positions. There is now present a non-limiting overview of a further method relating to tensor network emulation methods. The methods relating to qubit positions may optionally output data for use in the tensor network-related methods, for example, a graph for emulation. The method emulates a quantum computation on a quantum computation system having a plurality of qubits. The method selects a node-qubit mapping (or 'mapping' for short) for use in the emulation. At least part of the method is performed on a classical computer. The term 'classical computer' is intended to mean an electronic-based computer that is not a quantum computer. Examples of classical computers for optional use with this method are discussed elsewhere herein. Any of the teachings of the overview may be combined with examples herein describing methods relating to Tensor networks.

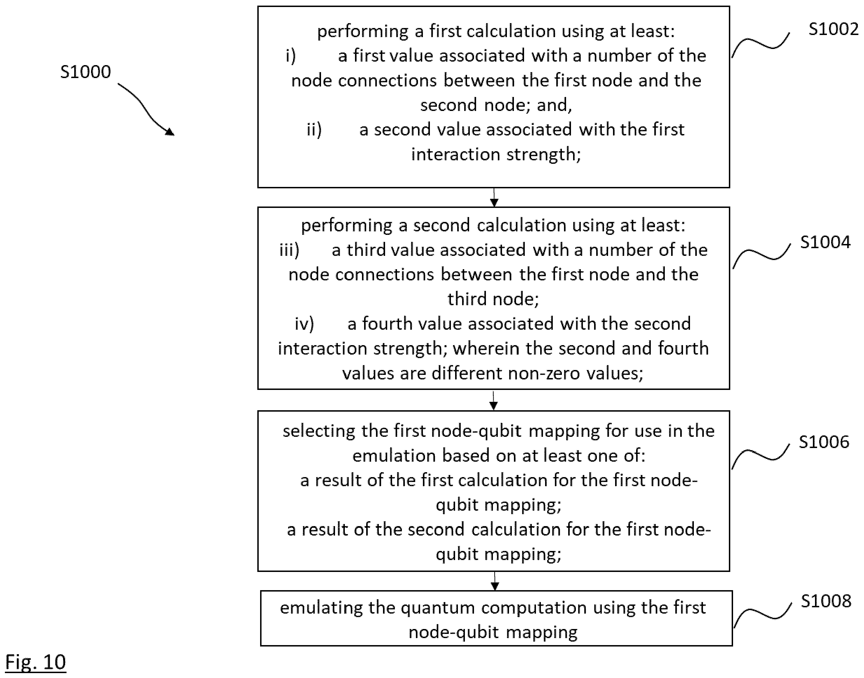

Figure 10 shows an example of this method. The method in figure 10 is a computer implemented method. The tensor network comprises a plurality of nodes wherein a plurality of node connections connects the plurality of nodes. The plurality of qubits comprises at least a first qubit, second qubit and third qubit. A first interaction strength is associated with the interaction between the first qubit and the second qubit. A second interaction strength is associated with the interaction between the first qubit and the third qubit.

Figure 10 shows an example of the steps performed using the computer for selecting at least a first node-qubit mapping and then emulating the quantum computation using that selected mapping. The mapping comprises a plurality of node-qubit links for linking each node to a different one of the plurality of qubits.

At step S1002 the method S1000 performs a first calculation using at least: i) a first value associated with a number of the node connections between the first node and the second node; and, ii) a second value associated with the first interaction strength. At step S1004 performs a second calculation using at least: iii) a third value associated with a number of the node connections between the first node and the third node; iv) a fourth value associated with the second interaction strength; wherein the second and fourth values are different non-zero values. Steps S1002 and S1004 may be performed in any order and may be performed simultaneously or at least partially overlapping in time.

At step S1006, the method selects the first node-qubit mapping for use in the emulation based on at least one of: i) a result of the first calculation for the first node-qubit mapping; ii) a result of the second calculation for the first node-qubit mapping.

After selecting the first node-qubit mapping the method moves onto step S1008 wherein the method emulates the quantum computation using the selected first node-qubit mapping.

This method and other examples of the method described herein may be applied to any type of Tensor network such as, but not limited to: Matrix Product States (MPS), Tree Tensor Networks (TTN), Projected Entangled Pair States (PEPS). The tensor network of this example or any other example herein comprises a plurality of nodes, in particular three or more nodes, for example fifty or more or one hundred or more nodes. Each node typically represents a single tensor in the network. The node connections of this example or any other example herein typically represent a bond between one node and another node. This method and other examples of the method described herein may be applied to any type of quantum computation such as, but not limited to: analogue or digital quantum computations; photon-based quantum computers of matter particle-based quantum computers such as ion or neutral atom-based quantum computers or superconducting quantum computers. Thus, the qubits may by atoms, ions, photons or superconducting structures. The method may also be applied to any quantum problem in which a state vector is calculated when described by a given Hamiltonian.

The interactions, i.e. quantum information transference, between the qubits in this method and other examples of the method described herein may be any qubit interaction including, but not limited to using Rydberg entablement; collective quantized motion of ions in a shared trap via the Coulomb force; nonlinear photonic effects. The method discusses mappings between qubits and nodes. For this method and other methods herein, the mapping may map a single qubit to a single node wherein each node is mapped to a different qubit than any of the other nodes. For this method and other methods herein, there may be multiple mappings, for example the method may use one mapping and determine that the mapping is usable for an emulation of the quantum computation. Alternatively, the method may use multiple mappings and choose one or more of those mappings to use in an emulation. For example, the method may perform calculations, using a classical computer, to determine that one mapping out of one hundred alternative, and different, mappings is to be used for an emulation. In another example the method may determine that a subset of two or more mappings of the total number of mappings may be useable for the emulation and may perform multiple emulations wherein each emulation uses a different mapping. The selection of a mapping may be performed using any one or more criteria. The criteria may be related to a distance matrix or a variable related to distance matrix. The criteria to select the mapping may be related to the efficiency of the computation of the emulation, for example minimising the number computational steps in the emulation.

The method selects the mapping based at least upon an interaction strength between the qubits associated with a given pair of nodes for a given node-qubit mapping. This interaction strength may be related to the physical mechanisms that allows quantum information to pass between qubits in the quantum computation. For example, the interaction strength may vary as a function of distance between qubits in the quantum computation, for example inversely proportional. Other variations may be utilised for different qubit types and/or different operating regimes of the quantum computer. For example, when using neutral atoms, the quantum system may be emulated for when the computation is analogue and using a Hamiltonian. The type of Hamiltonian used, hence the variation of interaction strength with distance, may vary depending on the way in which the qubit atoms are driven using electromagnetic (EM) fields.

The method further selects the mapping based at least upon the number of node connections between different pairs of nodes for the given mapping. The number of node connection in between the node pair may be any number of connections, i.e. one connection or two or more. These connections may be direct node connections, i.e. bonds between tensors. For example, the two nodes in the pair may be connected to each other via three other nodes in a linear chain of nodes. In this particular example there will be four node connections in the linear chain of 5 nodes where the pair of nodes under consideration are the end nodes in this particular chain.

Unlike prior art methods using RCM, wherein the effect of lower strength qubit interactions are negated when re-labelling the qubits, the present method factors in these lower strength interactions. Factoring in lower strength qubit interactions may be advantageous to provide a more accurate representation of the quantum system being emulated.

For quantum computers using neutral atoms and the Van der Waals interaction for the qubit interactions, the Van der Waals interaction has a decreasing tail of interaction strength with increasing qubit-qubit distance. Even though such longer range qubit interactions are small their effects may still be important to factor into the emulation both for computation accuracy of the emulation to represent the real quantum system but also on classical computational resource such as computer memory usage and processing power.

When determining which qubit (of the quantum system being emulated) is assigned to which node of the tensor network, the present method uses data concerning both the number of node contractions between two nodes and the strength of the qubit interactions for the respective qubits to determine whether that individual node-qubit mapping, and hence the overall node qubit mapping for the whole tensor network is optimal for preserving entanglement information but also minimising computational burden.

Tensor networks entanglement examples

We now discuss tensor networks in general and examples of entangled and unentangled quantum systems with a plurality of qubits. Any of the details in the discussion underneath may be factored into the method. The tensor network exemplifies an MPS tensor network, however other types of tensor network may be used with the method. Firstly, we provide examples of how a tensor network may be configured to emulate a quantum system.

An example of a simple quantum system $|\Psi\rangle$ having one qubit taking either a 0 or 1 value is shown below.

$$|\Psi\rangle = \alpha_0|0\rangle + \alpha_1|1\rangle.$$

[Equ. 14]

The complex number (or coefficient) $\alpha_0$ characterises probability $p_0 = |\alpha_0|^2$ of a qubit being at the state 10) and, respectively, the complex number $\alpha_1$ characterises probability $p_1 = |\alpha_1|^2$ of a qubit being at the state 11). Note, these probabilities sum up to unity, $p_0 + p_1 = |\alpha_0|^2 + |\alpha_1|^2 = 1$ . In the following these coefficients are grouped into an array $\alpha_i = [\alpha_0, \alpha_1]$. Note, the index, $i$, points to the corresponding quantum state, 0 or 1, hence this array fully describes the above quantum state as $\Sigma\alpha_i|i\rangle$.

A more complicated case, for example a 2 qubit quantum system, is described by

$$|\Psi\rangle = \alpha_{00}|00\rangle + \alpha_{01}|01\rangle + \alpha_{10}|10\rangle + \alpha_{11}|11\rangle.$$

[Equ. 15]

This two-qubit example can be treated in the same way as above with introducing two indices $i$ and $j$ characterising the state of the first and second qubits respectively. For instance, $i = 1$ and $j = 0$ relates to the state such that the first qubit is in the state 1, the second in the state 0 in the two-qubit system, i.e. $|10\rangle$. Each complex coefficient $\alpha_{ij}$ defines the probability of being in the state $|ij\rangle$ as $p_{ij} = |\alpha_{ij}|^2$. The complex numbers $\alpha_{ij}$ form a two-dimensional array $\alpha_{ij} = [[\alpha_{00}, \alpha_{01}], [\alpha_{10}, \alpha_{11}]]$. Again, this array fully characterises the 2-qubit system and Equ. 15 can be rewritten as

$$|\Psi\rangle = \alpha_{00}|00\rangle + \alpha_{01}|01\rangle + \alpha_{10}|10\rangle + \alpha_{11}|11\rangle$$

$$= \sum \alpha_{ij}|ij\rangle.$$

[Equ. 16]

Note, that these coefficients are said to be normalized such that probabilities sum up to unity, $\Sigma p_{ij} = \Sigma|\alpha_{ij}|^2 = 1$.

In the same way, a three qubit system follows the framework above and is described by three indices $i, j$ and $k$. The eight quantum states $|ijk\rangle$ have eight corresponding coefficients $\alpha_{ijk}$ forming 3 dimensional array. The full quantum state can be written as

$$|\Psi\rangle = \alpha_{000}|000\rangle + \alpha_{010}|010\rangle + \alpha_{100}|100\rangle + \alpha_{110}|110\rangle$$

$$+\alpha_{001}|001\rangle + \alpha_{011}|011\rangle + \alpha_{101}|101\rangle + \alpha_{111}|111\rangle$$

$$= \sum \alpha_{ijk}|ijk\rangle.$$

[Equ. 17]

Following the above pattern, a N-qubit systems is described by $N$ indices $\{i, j, k, ... \}$ and $2^N$ coefficients $\alpha_{ijk...}$.

This $N$-dimensional array with $2^N$ complex coefficients require memory to store it in a computer. One number in the array, $\alpha$, weights, for instance, 16 bytes, thus an array of $2^N$ numbers occupies $2^N * 16$ bytes, i.e. this scales exponentially. For example, a 10 qubit system requires 16 KiB, a 20 qubits requires 16 MiB and a 30 qubits requires 30 GiB.

The memory problem faced when considering a large weight multidimensional array can be circumvented by set of tensor network techniques. The key idea of the tensor networks is to break the big array into product of smaller arrays. The following examples demonstrate this idea.

We consider an *N* qubit system, which is described by the state, for instance,

$$|\Psi\rangle = |00\ldots0\rangle.$$

[Equ. 18]

As discussed above, *N* qubit states require an *N*-dim array $\alpha_{ij\ldots k}$ that define $2^N$ coefficients requiring a lot of memory to store. Tensor network techniques allow to represent the state $|\Psi\rangle = |00\ldots0\rangle$ in a much more compact way. In particular, we attempt to describe the entire system of N qubits by describing each constituent by a separate matrix.

According to Equ. 14 the wave function of a given one qubit system is $|\Psi_1\rangle = \Sigma\alpha_i|i\rangle$. Therefore, we might use the ansatz that the quantum state of N qubits might be described as a product of 1 qubit states:

$$|\Psi_N\rangle = |\Psi_1\rangle \otimes |\Psi_1\rangle \otimes \ldots \otimes |\Psi_1\rangle$$

$$= \sum\alpha_i\alpha_j\ldots\alpha_k|ij\ldots k\rangle$$

[Equ. 19]

Comparing to the $|\Psi_N\rangle$ from the general form outline previously, one finds that $\alpha_{ij\ldots k} = \alpha_i\alpha_j\ldots\alpha_k$. Every coefficient $\alpha_s$ on the right-hand side has two parameters, $\alpha_0 = 1$ and $\alpha_1 = 0$, or equivalently, $\alpha_s = [1,0]$, where $\alpha_1 = 0$ means that $10\rangle$ doesn't contribute to $|\Psi_N\rangle$. Thus, the right-hand side of Equ. 19 has $2N$ parameters, whereas the left hand side should have $2^N$ as we discussed previously. This example shows significant reduction from exponential $2^N$ cost to linear $2N$ in terms of memory.

The representation:

$$\alpha_{ij\ldots k} = \alpha_i\alpha_j\ldots\alpha_k$$

[Equ. 20]

is a simplest example of, so called, Matrix Product States (MPS); the *N*-dimensional array $\alpha_{ij\ldots k}$ is presented as a product 1-dimensional arrays or, equivalently (2,1) matrices $\alpha_s$.

This simplification is only valid under certain conditions, however. The state $|\Psi_N\rangle = |00\ldots0\rangle$ is not an entangled state. Here we see that tensor network techniques can efficiently describe low entangled states and non-entangled states with reduced memory. But not every state can be represented efficiently and, in general, the representation Equ. 20 does not hold and we still require exponential amount of memory resources because $\alpha_{ij\ldots k}$ cannot be presented as a product of $\alpha_s$. For highly entangled states Equ. 20 has more complicated form, which we are going to discuss next.

We consider aa three qubit system described by the entangled state:

$$|\Psi_3\rangle = |000\rangle + |101\rangle.$$

[Equ. 21]

Note, in order not to clutter the notations we chose to ignore normalisation. As discussed above, a three qubit states require a 3-dim array $\alpha_{ijk}$. Here, the nonzero coefficients are $\alpha_{000} = 1$ and $\alpha_{101} = 1$ only. Due to this entanglement, the tensor of coefficients $\alpha_{ijk}$ cannot be decomposed as a simple product of $\alpha_s$. Instead we propose another MPS ansatz:

$$|\Psi_3\rangle = (|0\rangle, |1\rangle) * \begin{pmatrix} a_0|0\rangle + a_1|1\rangle & b_0|0\rangle + b_1|1\rangle \\ c_0|0\rangle + c_1|1\rangle & d_0|0\rangle + d_1|1\rangle \end{pmatrix} * \begin{pmatrix} |0\rangle \\ |1\rangle \end{pmatrix}$$

$$= A_1 * A_2 * A_3,$$

[Equ. 22]

where $A_s$ are matrices of sizes 1x2, 2x2 and 2x1 describing each qubit respectively. The coefficients $a_i$, $b_i$, $c_i$ and $d_i$ are to be determined. Expanding Equ. 22 one finds:

$$|\Psi_3\rangle = a_0|000\rangle + a_1|010\rangle + c_0|100\rangle + c_1|110\rangle$$

$$+ b_0|001\rangle + b_1|011\rangle + d_0|101\rangle + d_1|111\rangle$$

[Equ. 23]

Therefore, the only nonzero coefficients are $a_0 = 1$ and $c_0 = 1$. As a result Equ. 23 obtains a simpler form:

$$|\Psi_3\rangle = (|0\rangle, |1\rangle) * \begin{pmatrix} |0\rangle & 0 \\ 0 & |0\rangle \end{pmatrix} * \begin{pmatrix} |0\rangle \\ |1\rangle \end{pmatrix}$$

$$= A_1 * A_2 * A_3,$$

[Equ. 24]

In the tensor network language matrices $A_s$ and $A_{s+1}$ said to share the bond because they are consecutive and further multiplication is assumed. Matrix multiplication implies that number of columns in $A_s$ is equal to the number of rows in $A_{s+1}$, and this number is called the 'bond dimension' between $A_s$ and $A_{s+1}$. We see that the set of bonds and their dimensions determine the size of matrices and therefore how much memory is required for storing a state in MPS form.
However, the representation of Eq. 23 is not unique. The order of qubits in any state $|\Psi\rangle$ is not fixed by nature and which qubit is said to be the first and which is said the be the second is our choice. One can name the qubits in the *same* quantum system differently without changing the physical properties of that system. For instance, instead of "one, two, three, ..." one can name them "apple, orange, cherry, ..." or, equivalently, "one, three, two, ...". The state $|\Psi_3\rangle = |000\rangle + |101\rangle$ implies that two qubits, namely first and third, are entangled but their properties doesn't depend on the order the qubits are placed. It is human line handwriting that imposes linear order and "defines" which qubit is written as the first in the state $|1 ...\rangle + |0 ...\rangle$. But from point of view of nature the same state can be written as $|...1 ...\rangle + |... 0 ...\rangle$.
Thus, the same quantum system described by the same quantum state, can be written differently, for instance as $|\Psi_3\rangle = |000\rangle + |110\rangle$, where the third and the second are swapped in our notation, or $|\Psi_3\rangle = |000\rangle + |011\rangle$ where the first and the second are swapped or $|\Psi_3\rangle = |101\rangle + |000\rangle$ where two terms are swapped. This swapping happens only in the textual representation of $|\Psi_N\rangle$, physically qubits are not touched.
Does this change MPS representation? Repeating the same process as in Equ. 22 and Equ. 23 to find the MPS representation of $|\Psi_3\rangle$ in which we have reordered the state to $|\Psi_3\rangle = |000\rangle + |110\rangle$ we notice that $a_0 = 1$, $c_0 = 1$ :

$$|\Psi_3\rangle = (|0\rangle, |1\rangle) * \begin{pmatrix} |0\rangle & 0 \\ |0\rangle & 0 \end{pmatrix} * \begin{pmatrix} |0\rangle \\ |1\rangle \end{pmatrix}$$

$$= A_1 * A_2 * A_3,$$

[Equ. 25]

Notice, the second column in $A_2$ consist of zeros, moreover, zeroes are multiplied by the second row of $A_3$. Hence, the resulting multiplication of column two in $A_2$ and row two in $A_3$ does not contribute to the final result at all. This fact allows us to drop those terms and the equation obtain the simplified form:

$$|\Psi_3\rangle = (|0\rangle, |1\rangle) * \begin{pmatrix} |0\rangle \\ |0\rangle \end{pmatrix} * |0\rangle$$

$$= A_1 * A_2 * A_3,$$

[Equ. 26]

Now the bond dimension between $A_2$ and $A_3$ is reduced when compared to Equ. 23.

This phenomenon happens in the general case for N qubits in the MPS representation of $|\Psi_N\rangle$. Matrices $A_i$ for larger systems have bigger size and more complicated structure. But they are still matrices and swapping names helps to significantly reduce bond dimension.

Detailed examples of the method

There is now presented examples of the method utilising tensor networks. A corresponding system comprising one or more computer processors for executing instructions giving rise to the method may be used. Each example may be adapted according any teaching herein including any of, but not limited to: details about the quantum computation to be emulated such as type of computation, number, type and arrangement of qubits; type of tensor network; number of nodes; number of node-qubit mappings used or compared; the type of qubit-node mapping first considered in the method; the values used in any of the calculations. It should be further understood that any of the above details presented for the example methods may be applicable to other examples of the methods described herein.

In a first example the method uses an MPS tensor network, although the principles may extend to others. The quantum computation is an analogue quantum computation using a neutral atom quantum computer. Examples of such a quantum computer and computation are described elsewhere herein and are usable with this and other methods relating to emulations using tensor networks. The analogue quantum computation is typically run via input parameters derived from a Hamiltonian operator that is mapped, for example, from a QUBO model. In the following example, the Hamiltonian operator is used for an analogue quantum computation via the evolution operator, as presented below. The evolution operator relates the output state |ψ(t)> of the qubits at time 't', in which a solution to the problem we are trying to solve is encoded, to the initial state of the qubits in the quantum system of the quantum computer, |ψ(0)>:

$$|\psi(t)\rangle = e^{-i\int_0^t H(t)dt}|\psi(0)\rangle.$$

[Equ. 27]

In a neutral atom quantum computer one or more driving electromagnetic (EM) fields (typically one or more lasers) is imparted onto the qubits of the quantum computer. Typically, the Hamiltonian H(t) contains the data for the qubit positions and the properties of the driving EM field. The properties of the EM field that may vary over time and that are represented in the Hamiltonian operator are the Rabi frequency and wavelength detuning amounts. Further details of operators and a quantum computer for use with the method are discussed underneath, however for purposes of discussion we will assume that the Hamiltonian is using an Ising model and as such the Rudberg blockade has a strength inversely proportional to the qubit distance to the power of six, i.e., $(1/(d^6))$ where d is the qubit-qubit spatial distance.

The quantum computation may be one for solving a problem as discussed elsewhere herein such as a problem associated with an amorphous solid or other problems including but not limited to involving an arrangement of items with an at least partially random spatial distribution. The method using a tensor network may be used to solve other problems such as but not limited to NP-hard problems.

In this example a value of a real variable 'b' is determined for a particular qubit node mapping. The value of the variable is determined for each qubit-node mapping considered by the method, which may be on or more than one qubit-node mapping.

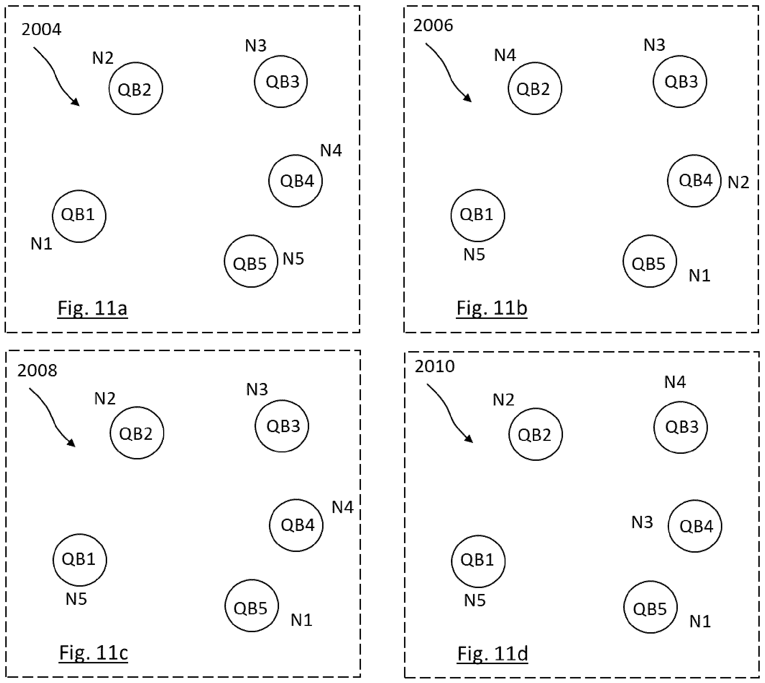

Figures 11a-11d are used to describe the principle of this example method. Each of the figures in 11a-11d show different node-qubit mappings wherein the node (N1-5) assigned to each qubit is shown next to the qubit QB1-5. Figures 11a-d only show four of the possible node-qubit mappings 2004, 2006, 2008, 2010 for these qubits, however further node-qubit mapping may be used. The nodes are arranged, in the calculation order, in the tensor network in a serial manner similar to that in figure A1 wherein, in order: N1 is the starting node has a bond with N2; N2 has a bond with N3; N3 has a bond with N4 and N4 has a bond with N5 wherein N5 is the end node in the node chain of the MPS. It should be understood that three or more nodes (hence three or more qubits) may be used with this example.

The value of the variable 'b' is determined, for each node mapping. The variable 'b' is determined using a plurality of calculations. A first calculation, which may be subdivided into a plurality of sub-calculations, takes one of the node pairs and determines the number of connections (hence bonds) between the two nodes. This may be accomplished in several ways including assigning an order number for each node in the node sequence and taking the magnitude of the difference between the two nodes. For example, the node pair N5 and N3 has two node connections because N4 resides between them; the node pair N1 and N2 has one node connection because they are directly connected to each other in the MPS chain. The number of connections forms a first value used in the first calculation. The first calculation also uses a second value that is determined by the interaction strength of the two qubits representing the node pair. For the node mapping in 2004, for example, the interaction strength would be the interaction strength between QB1 and QB5 is the node pair was N1 and N5. The second value in this example is a value proportional to interaction strength of the Van der Waals interaction with distance d between the two qubits, which as described above is $(1/(d^6))$ where d is the qubit-qubit spatial distance. The first value and second value are multiplied together to give a result for the first calculation. Other values and constants may be used to generate this result.

The method either simultaneously or at a different time determines a further result using a similar 'second' calculation for a second node pair for the same mapping 2004. This process of determining results is continued for each qubit pair in the mapping 2004. Once all of the calculations results are finished, the maximum result of all the results is found as the value of the variable 'b'. Note, for the special case of the MPS this 'b' variable can be related to a matrix bandwidth but is not necessarily be the same as the common definition of matrix bandwidth.

In our example, this 'b' variable provides an effective bandwidth for that particular mapping that takes into account, for each node pair, the effect of the number of bonds between the pair and the effect of the interaction strength. The inventors of the present application have discovered that simply clustering interactions to 1 or 0 does not yield favourable results when emulating a quantum system and that the interaction strength of long interaction tails, such as in Van der Waals interactions, may have an impact on the optimal node-qubit mapping. Deriving the 'b' parameter in this way may give a truer reflection of the entanglement between qubits.

The method may simply compare the value of the variable 'b' for the first considered mapping to a condition , such as a threshold value, and output that mapping as the mapping to use. For example, if the value of b is below a certain threshold value, then the method may output the mapping for using in the emulation. Preferably, however, the same value of b variable is calculated for one or more other of the node qubit mappings, for example the mapping 2006. The method may the select one of the mappings for use in the emulation based on one or more conditions. A preferred condition is to use the mapping with the minimum value of the b variable.

Thus, the method may determine a b variable value for each mapping available and then select the mapping with the minimum b-parameter value for use in the emulation. In this example, the mapping includes all of the mappings 2004, 2006, 2008 and 2010 and other mappings not shown in the figures.

A worked example is now provided for the examples shown in figure 11a-d wherein we consider the qubit pairs corresponding to: a) QB4 and QB5; b) QB1 and QB5 for the two mappings 2006 and 2010. The interaction strength between QB4 and QB5 may be the largest interaction strength because it has the smallest distance between the two qubits. Let us say the distance 'd' between qubit QB4 and QB5 is 0.5 (arb. Units) and the distance 'd' between qubit QB1 and QB5 is 1.5 (arb. Units).

For the qubit mapping 2006 the first calculation is made for qubits QB4 and QB5 as follows. The first value is '1' because the number of node connections between the assigned nodes N2 and N1 is 1. The second value used in the first calculation is $1/d^6 = 64$. The first calculation result is therefore 1 x 64 = 64.

For the qubit mapping 2006 the second calculation is made for qubits QB1 and QB5 as follows. The first value is '4' because the number of node connections between the assigned nodes N5 and N1 is 4. The second value used in the first calculation is $1/d^6 = 0.088$. The second calculation result is therefore 4 x 0.088 = 0.35.

From just comparing these two qubits and their node pairs we see that the node pair QB4-QB5 yields the maximum value of the b variable just from these two calculations alone. The b(max) for this mapping 2006 just comparing these two qubits is 64.

For the qubit mapping 2010 the first calculation is made for qubits QB4 and QB5 as follows. The first value is '2' because the number of node connections between the assigned nodes N1 and N3 is 2. The second value used in the first calculation is $1/d^6 = 64$. The first calculation result is therefore 2 x 64 = 128.

For the qubit mapping 2010 the second calculation is made for qubits QB1 and QB5 as follows. The first value is '4' because the number of node connections between the assigned nodes N5 and N1 is 4. The second value used in the first calculation is $1/d^6 = 0.088$. The second calculation result is therefore 4 x 0.088 = 0.35.

From just comparing these two qubits and their node pairs we see that the node pair QB4-QB5 is the maximum value of the b value just from these two calculations alone. The b(max) for this mapping 2010 just comparing these two qubits is 128.

The method then identifies that the mapping 2006 has the minimum b(max) of 64 (as opposed to the b(max) from the mapping 2010) and selects this mapping 2006 for use in the emulation from the two mappings.

This above example may be extended to include all qubit pairs (hence associated node pairs) and all possible mappings. The above working example is enumerative and can be computationally intractable when scaling up. Therefore, more generally, the method may implement an optimization algorithm, to find the best mapping in a tractable way.

The method may be implemented using an optimisation algorithm or routine, for example using linear program. The program may utilise the following equations wherein we may represent the tensor network as an undirected complete graph having V vertices (nodes) and E edges such that $G = (V, E)$. The b(max) parameter for each mapping may be defined as:

$$b = \max_{u,v \in V^2 : u \neq v} \frac{1}{d_{uv}^6} |\pi(u) - \pi(v)|$$

[Equ. A28]

where $\pi(u/v)$ represents the position of node u in the ordering and d represents the distance between qubits associated with the node u, v.

The above equation is a formulation for MPS, however the method may be applied to a more general case of tensor network wherein the term $|\pi(u) - \pi(v)|$ is replaced by $D_{uv}$ which is the distance between the nodes in the Tensor network anzats in terms of the number of bonds.

In the following, we use Integer Linear Programming (ILP) and introduce a decision variable as the following:

$$x_u^i = \begin{cases} 1 \ if \ the \ position \ of \ u \ is \ equal \ to \ i \\ \quad 0 \ otherwise \end{cases}$$

$$where, \ u \in V, i - 1, \ldots, n$$

[Equ. 29]

The objective function is:

$$\min b$$

[Equ. 30]

such that:

$$\sum_{u=1}^{n} x_u^i = 1$$

$$where, \ \forall i = 1, \ldots, n$$

[Equ. 31]

$$\sum_{u=1}^{n} x_u^i = 1$$

$$where, \ \forall u \in V$$

[Equ. 32]

$$\sum_{u=1}^{n} \left( ix_u^i - ix_v^i \right) \le d_{u,v}^6 \cdot b$$

where, $\forall u, v \in V^2, u \ne v$

[Equ. 33]

$$b \ge 0, x_u^i \in \{0,1\}$$

where, $\forall u \in V, i = 1, \dots, n$

[Equ. 34]

Equ. 31 assigns exactly one node for each qubit I. Equ. 32 assigns exactly 1 qubit for each node. Equ 33 uses the first value and the second value to perform the calculation of the b variable for each pair of nodes. Equ. 34 states the domain constraints of the variables.

The above formulation may be solved using a commercially available solver.

In any examples of the method, the method may utilise an initial node-qubit mapping that may constitute a promising start over other node qubit mappings. The method may do this, for example by using the RCM heuristic to determine a mapping and then use that initial mapping as a first mapping. In other words, the method may provide the solution determined by the RCM heuristic as an initial solution to the formulation. This solution provides a lower bound of the objective function of the linear program:

$$\max_{u,v \in V^2 : u \ne v} \frac{1}{d_{uv}^6} \le b$$

[Equ. 35]

Adding Equ. 35 to the ILP, as given by Equ. 30-34 allows tightening the solution space, thereby improving the computational time of the optimization algorithm that solves the ILP.

Numerical experiments

The above method was implemented in a series of numerical experiments as discussed below.

For the purpose of our numerical experiments, amorphous solid models were generated wherein different qubits related to different atoms. The amorphous solids generated were characterized by a varying number of sites, specifically: 20, 30, 40, 50, and 60. For each fixed number of sites, 7 different instances were generated with coordination number four, culminating in a total of 35 different instances for evaluation. The entire process was executed in the Python programming language, and the numerical experiments were carried out using the Gurobi™ solver.

Three metrics were used for performance evaluation, namely:

ILP time (s.): Resolution time.
RCM gap (%): Defined as the difference between the objective value of the RCM and the optimal solution, relative to the optimal solution. It is mathematically represented by the equation:

$$RCM \; gap \; (\%) = \frac{Obj(RCM) - Opt}{Opt} x100$$

[Equ. 36]

where: Opt stands for the optimal objective value; Obj(RCM) represents the Cuthill-McKee objective value.

The sensitivity analysis relays on the gap tolerance metric. In optimization, the gap tolerance for an ILP solver refers to the acceptable difference between the upper and lower bounds of the objective function. This gap provides a measure of how close a solution is to optimality.

In ILP, problems are usually solved using branch-and-bound algorithms. These algorithms maintain an upper bound (best known feasible solution) and a lower bound (best possible solution derived from solving the linear relaxation of the ILP). The difference between these two bounds is the optimality gap which provides a measure of how far the best-known upper bound (UB) is from the best-known lower bound (LB). This is called the relative gap, and the mathematical representation is:

$$Relative\ gap\ (\%) = \frac{UB - LB}{UB} x100$$

[Equ. 37]

If this gap is below a certain threshold, which is the gap tolerance, the algorithm stops and considers the current solution as good enough.

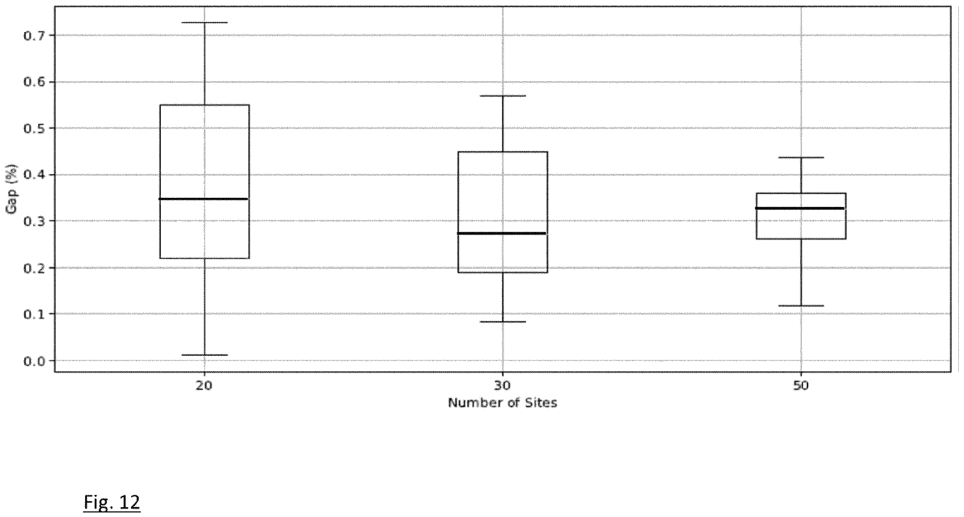

Figure 12 shows the average gap, per number of sites, between RCM and the method presented herein implemented using an Integer Linear Program (ILP) as discussed above. Fig. 12 indicates that for the considered dataset, the RCM heuristic does not prove to be very effective, with an average gap around 30% and a maximum gap of 50%. Given the substantial gap in RCM solutions relative to the optimal ordering, it becomes imperative to explore superior solutions to enhance the efficiency of Tensor network simulations.

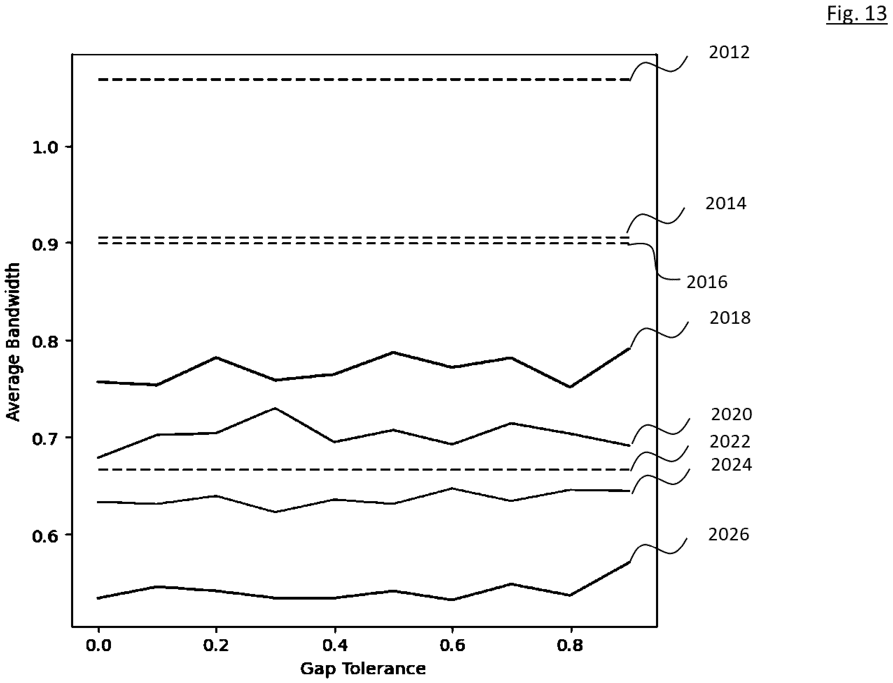

Figure 13 shows the average ILP and RCM bandwidth in function of Gap tolerance where: 2012 is RCM for number of sites = 60; 2014 is RCM for number of sites = 50; 2016 is RCM for number of sites = 40; 2018 is ILP for number of sites = 60; 2020 is ILP for number of sites = 50; 2022 is RCM for number of sites = 30; 2024 is ILP for number of sites = 40; 2026 is ILP for number of sites = 30.

Figure 13 shows that for the same number of 'sites' in the numerical experiment, the present method implemented using an ILP provides improved bandwidth over the equivalent RCM method. Results further showed that for same number of 'sites' in the experiment, the RCM derived node-qubit mapping always yielded higher average memory usage and longer computation times when the tensor network was run than the equivalent set-up where the ILP was used to derive the node-qubit mapping.

General example of a neutral atom quantum computer system set-up for use with the methods and systems

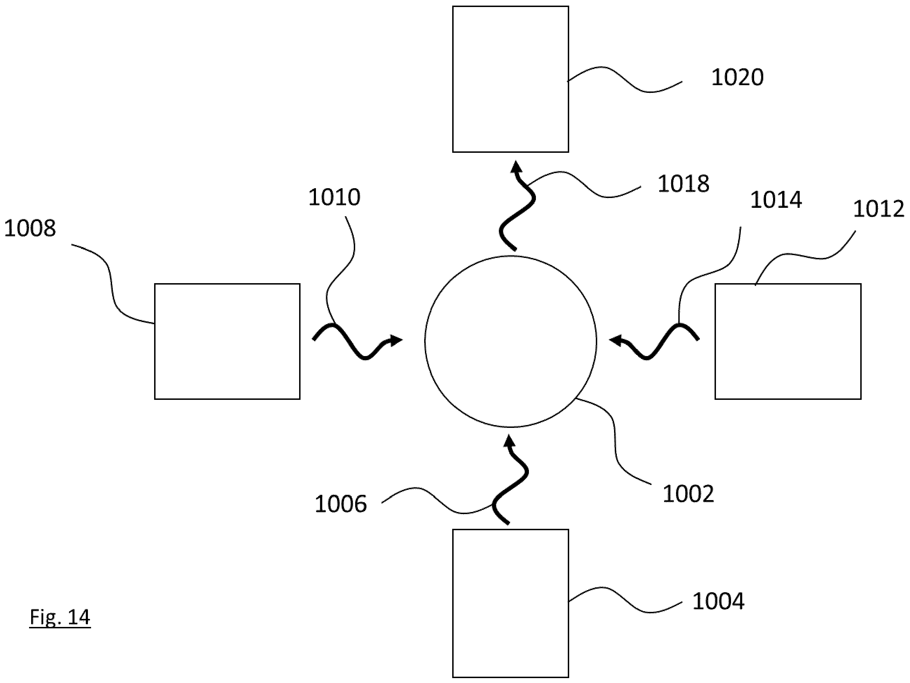

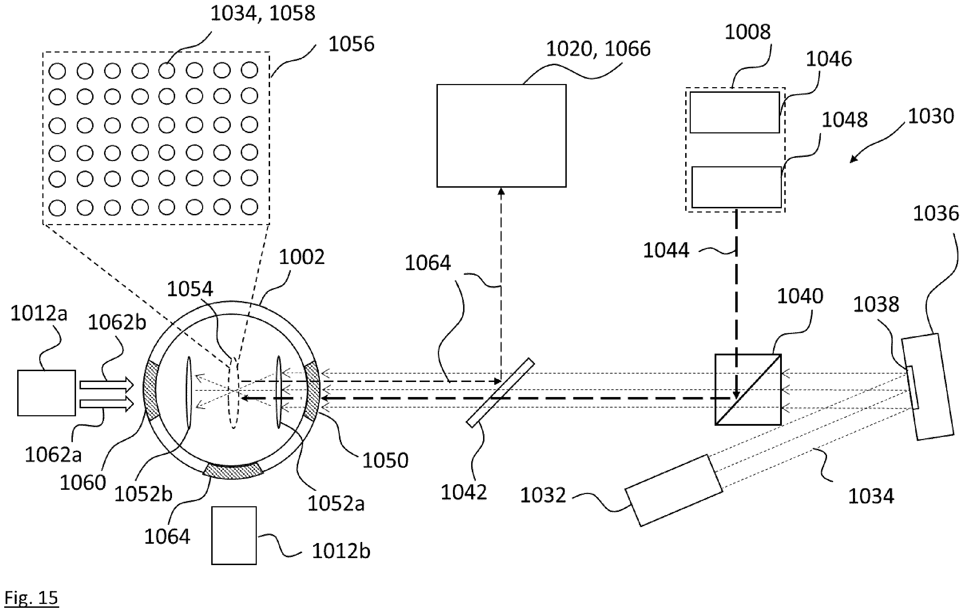

There now follows a discussion of an example analogue quantum computing system for optional use with the any of the methods and systems presented herein where a quantum computer is described to be used. As discussed above, the method may in principle be applied to other analogue quantum computers such as ion trapped QCs. The method may be enacted by an apparatus, a system of components, a device or a plurality of devices. Figure 14 shows a general schematic of a set-up for neutral atom quantum computer. The set-up may be referred to as a 'quantum computing system'. Figure 15 shows a further, more detailed, example of such a set-up.

As a schematic, the positions and configurations of the elements in figure 14 are not supposed to imply any real-world size, positioning or configuration of features, but merely to illustrate an example of the key functioning components of a neutral atom quantum computing system that can be used with the methods and systems discussed herein.

In figure 14, a chamber 1002 is provided that accommodates a plurality of atoms. The atoms are of the same element, hence are, from a chemical standpoint, identical when no external interactions are imposed upon them. The atoms are unbound to other atoms in the group, for example, by being in a gaseous matter state. Atoms used in the chamber 1002, for trapping, positioning and atomic-state-manipulating may be any suitable atom, for example, but not limited to, any of Rubidium, Caesium, Strontium and Ytterbium. Other elements or element groups may also be used. Preferably the atoms used are those having one or two valence electrons such as alkali metals and alkali earth metals however others may also be used such as rare earth elements.

A group of the atoms are held by a holding apparatus 1004. The holding apparatus 1004 acts to isolate each individual atom such that each atom, in the group, is held in a different point in space (to the other atoms of the group) within the chamber 1002. The term 'isolate' in this context means that the atoms are held away from each other, in space, and do not nominally interact (when in a non-excited atomic state) with adjacently held atoms of the same group. The atoms are thus maintained in a desired position for a period of time longer than they would be in that position if no holding apparatus 1004 were used and the atoms were allowed to move freely. If the atoms are acted upon by an input stimulus such as, for example, an electromagnetic signal of one or more photons, held atoms may interact with other held atoms using particular physical effects such as, but not limited to, the Rydberg blockade. There may be a pattern of spatially separated traps. The pattern may be an array of regular or irregular spaced traps. The pattern may be 1D. The pattern may be 2D insofar that the traps in the pattern all align along one plane. The pattern may be 3D. An example of a set of traps is a 3D array of traps spaced periodically in all of X, Y and Z dimensions, for example a 3D grid. Other patterns are also possible. The spacing in one spatial dimension may be the same or different to the other spatial dimensions.

The holding apparatus 1004 may act to maintain the atoms in their respective stationary positions using different mechanisms including, but not limited to, magnetics traps and optical traps. The holding apparatus 1004 may provide a plurality of trap sites wherein, when first activated to output the traps, typically some trap sites are filled by one or more atoms whilst other trap sites are vacant. Preferably the holding apparatus 1004 is configured to present trap sites that hold only one atom at a time. In figure 14 we assume that the holding apparatus 1004 uses one or more electromagnetic signals, such as optical signals 1006, that are input into the chamber 1002 to affect the optical traps. The electromagnetic signals may be any suitable wavelength, including but not limited to 800-1500nm, more preferably 820 - 880nm. Figure 14 shows the holding apparatus 1004 being external to the chamber 1002, however, the holding apparatus 1004 may form part of the chamber 1002 or be inside the chamber 1002. Although only a single holding apparatus 1004 is shown in figure 14, it is envisaged that more than one holding apparatus 1004 may be used.

An atom positioner 1008 is also shown in figure 14. The atom positioner 1008 is an apparatus that is able to controllably move one or more held atoms from one spatial position to another spatial position. For example, the atom positioner 1008 may move an atom trapped in one of the optical trap sites to another different trap site. Figure 14 shows the atom positioner 1008 being external to the chamber 1002, however, the atom positioner 1008 may form part of the chamber 1002 or be inside the chamber 1002. Furthermore, the atom positioner 1008 and holding apparatus 1004 may be part of the same device or system for holding and moving the atoms. The atom positioner 1008 may use different technologies to manipulate the position of the atoms including, but not limited to, moving the atoms using magnetic signals or electromagnetic signals such as optical signals 1010. The electromagnetic signals may be any suitable wavelength including, but not limited to, 800-1500nm, more preferably 820 - 880nm. In figure 14 we assume that optical signals 1010 are used such as, but not limited to, optical tweezers. Although only a single atom positioner 1008 is shown in figure 14, it is envisaged that more than one atom positioners 1008 may be used.

An atomic state actuator 1012 is also shown in figure 14. This atomic state actuator 1012 outputs one or more signals to control and manipulate the atomic states of one or more of the atoms in the chamber 1002, preferably the trapped atoms, i.e., it actuates the transition between atomic states. The signals output by the atomic state actuator 1012 are electromagnetic signals 1014 of one or more photons. Different signals may be output by the atomic state actuator 1012 including signals at different wavelengths. Each wavelength may correspond to (i.e., be resonant with) a different atomic transition. The atomic transition may occur through single-photon absorption or multiple-photon absorption, such as two-photon absorption. This may be accomplished using two (or more) different EM sources such as lasers or other EM sources. These two EM sources may have different wavelengths.

Although only a single atomic state actuator 1012 is shown in figure 14, it is envisaged that more than one atomic state actuator 1012 may be used. For example, a first atomic state actuator 1012 may output a different wavelength or set of wavelengths than a second atomic state actuator 1012. The atomic state actuator may facilitate the transition between atomic states of a single trapped atom or a plurality of trapped atoms. For example, two or more, three or more, trapped atoms, or all of the trapped atoms. Figure 14 shows the atomic state actuator 1012 being external to the chamber 1002, however, the atomic state actuator 1012 may form part of the chamber 1002 or be inside the chamber 1002. The electromagnetic wavelength for transitioning a rubidium atom to the Rydberg state may be 297nm. The electromagnetic wavelength for transitioning a Caesium atom to the Rydberg state may be 318.6nm.

Preferably any electromagnetic signals used to trap and move the atoms are preferably different, at least in wavelength, to the electromagnetic EM signals used to manipulate the quantum states of the atoms. In particular, any EM signals for trapping and moving the atoms are preferably off-resonance, i.e., the wavelength of the holding and positioning electromagnetic signals do not act to excite the atom between different atomic states.

A detector 1020 is also shown in figure 14. This detector 1020 is used to monitor electromagnetic signals 1018 output from the atoms in the chamber 1002. This detector 1020 may comprise a camera. The camera may be used to image the fluorescence output by the atoms held by the holding apparatus 1004. Figure 14 shows the detector 1020 being external to the chamber 1002, however, the detector 20 may form part of the chamber 1002 or be inside the chamber 1002.

An example of the general operation of the neutral atom quantum computing system may be as follows, wherein any of the following steps may be omitted, combined, rearranged in order, or adapted using features from other examples herein. Furthermore, other steps may be included before, at the same time, or after any of the steps listed below.

A) Firstly, the holding apparatus 1004 emits signals into the chamber 1002 to create a plurality of optical traps.
B) Some of the ensemble of atoms in the chamber 1002 are automatically trapped by the plurality of traps.
C) The atom positioner 1008 is then optionally used to move some, or all, of the trapped atoms between traps so that at least a particular set of the traps are each filled by an atom. This set of traps may be referred to as a 'register'. The detector 1020 may be used in this process to help identify which traps are occupied or vacant. In some examples the atom positioner 1008 may not be required.

D) The atomic state actuator 1012 outputs one or more electromagnetic signals 1014 to control atomic state transitions of at least one of the atoms. This step may be performed a plurality of times to implement processing operations of the quantum computer, for example, time-sequentially inputting a plurality of electromagnetic signals that provide an amplitude-time profile and a frequency-time profile.

E) The detector 1020 is used to determine the atomic states of the atoms after the signals in step D) have been performed.

The quantum system may be re-set by at least removing the traps. The quantum system may then be re-initialised for a further quantum computation by repeating steps A)-E) above for a further time period.

Any features described above in the above general example of a neutral atom quantum computer set-up of figure 14, including but not limited to: the atoms used; the atomic state actuator 1012; the atom positioner 1008; the holding apparatus 1004; the detector 1020; the general operation; may be used with any other example presented herein.

Detailed example of a neutral atom quantum computer system set-up

Figure 15 shows a specific, non-limiting, example of a neutral atom quantum computing/system setup 30 that may be used with the method or system presented herein. The chamber 1002 is a vacuum chamber and a dilute atomic vapour is formed inside the chamber 1002. The chamber 1002 is an ultra-high vacuum system operating at room temperature, however other environmental temperatures may be formed inside the chamber 1002. Figure 15 is a more detailed example of figure 14 wherein like references in the figures represent like components.

This set-up may be adapted according to any teaching herein including, but not limited to, the features described above for figure 14. The set-up in figure 15 may also be referred to as a 'quantum processor' or 'quantum system'. It is to be understood that the example in figure 15 is just one example of a set-up for a quantum processor and provides a 2D array of optical trapping sites, however other set-ups may be used, for example to implement a 3D array of trapping sites by including a plurality of the below-mentioned components and/or different component locations and/or configurations. The example in figure 15 may also be adapted by removing components, adding components, combining components and re-positioning components.

In figure 15 a laser system 1032, comprising a laser and beam-expanding optics, outputs a cross-sectionally-wide collimated laser beam 1034 towards a spatial light modulator (SLM) 1036. The SLM 1036 and the laser system 1032 being equivalent to the holding apparatus 1004 in figure 15. The SLM 1036 comprises a 2D periodic array of controllable deformable mirrors 1038 which receive the collimated beam 1034 and selectively reflect portions of the beam 1034 towards a polarising beam splitter (PBS) 1040. The SLM 1036 outputs an adjustable phase pattern on the light 1034, that in turn gets converted into an intensity pattern 1058 by first lens 1052a, as described later. The polarisation of the reflected portions of the beam 1034 pass through the PBS 1040 and propagate towards a dichroic mirror 1042. It is understood that the laser system 1032 may have other components such as a polarisation rotator (not shown) for controllably adjusting the polarisation of output light 1034 incident upon the SLM 1036, so that the polarisation of light 1034 is aligned to the transmission axis of the PBS 1040.

The PBS 1040 also receives electromagnetic signals 1044 from an atom positioner 1008 comprising a laser 1046 and a 2D acousto-optic laser beam deflector 1048 that receives laser light from the laser 1046 and controls the direction of the laser light into the PBS 1040. In turn, this allows the deflector 1048 to use the laser light 1044 as an optical tweezer or an array of optical tweezers. The light 1044 output from the atom positioner 1008 is reflected by the PBS 1040 such that it is output from the PBS 1040 along a substantially similar path to the light 1034 output from the PBS 1040 that originates from the laser system 1032. The light beams 1034 and 1044 may at least partially overlap in space when output from the PBS 1040. The light 1044 originating from positioner 1008 that is reflected and output by the PBS 1040 is incident upon the dichroic mirror 1042.

It is noted that the position and direction of light rays in figure 15, such as beams 1034 and 1040, are shown spatially separate to each other, however this is merely for purposes of visual clarity in the figure and may not represent the beam positions in practice.

Both the light 1044 and 1034 output from the PBS 1040 pass through the dichroic mirror 1042 and are incident upon window 1050 of the chamber 1002. The window 1050 may be one of a plurality of windows in the chamber 1002 that are at least partially transparent to the wavelengths of the light that are incident upon them that are generated by the electromagnetic sources of the system 1030. The window 1050 forms part of the body of the chamber 1002 and is sealed with respect to the walls of the chamber such that the chamber 1002 holds a vacuum environment within it. Other components may be associated with the vacuum chamber 1002 by either being inside the chamber 1002, integrated with the chamber 1002 or immediately surrounding the chamber 1002 insofar that the components may input stimuli into the chamber 1002, such as electromagnetic fields or magnetic fields. One or more magnetic coils (not shown) may be included about the chamber 1002 to provide a spatially-varying magnetic field that, with the laser light 1034, acts to provide a magneto-optical trap (MOT). The laser light 1034 may have a wavelength configured to cool the atoms via the mechanism of doppler cooling. The light 1034 may be split and/or reflected by other optical components (not shown) to provide a plurality of beams propagating along different directions that intersect the trapping area 1054. Such beams may be used to provide cooling in a plurality of directions such as along X, Y, and Z cartesian axes. Further laser light beams from one or more further sources may be used to cool and trap the atoms. The coils may comprise two coils in an anti-Helmholtz configuration that are used to generate a weak quadrupolar magnetic field to facilitate, with the laser light 1034, the magneto-optical trap. The quantum system 1030 may use different forms of trapping mechanisms and associated equipment to trap the neutral atoms, as known in the art, for example, but not limited to any of the trapping and cooling systems described in: "Harold J Metcalf and Peter van der Straten. Laser cooling and trapping of atoms. JOSA B, 20(5):887-908, 2003" the entire contents of which are included herein by reference.

Inside the chamber 1002 are a pair of convex lenses 1052a, 1052b. The first lens 1052a is positioned to receive light beams 1034 and 1044 passing through the window 1050 and focus them both onto a trapping area 1054 of minimum beam waist (i.e., at the focal plane of the lens 1052a). The second lens 1052b is located on the opposite side of the focal plane and captures light exiting the trapping area 1054 and focusses or collimates the light into a plurality of light beams that may be incident upon: a beam dump inside the chamber 1002 (not shown) or another chamber window 1060 that allows the light to escape the chamber 1002.

An expanded view 1056 of the focal plane in area 1054 is also shown in figure 15 wherein an array of optical trapping sites 1058 are shown that are created from the mirrors 1038 of the SLM 1036 reflecting portions of the light 1034.

Figure 15 further shows two atomic state actuators 1012a/b that take the form of lasers that output light for manipulating the states of the atoms trapped at the trapping sites 1058. In figure 15, actuator 1012a is a system comprising two (or more) lasers, each laser may output light at a different wavelength 1062a/b. Different wavelengths may match different atomic transitions of the atomic system (or 'ensemble') held in the chamber 1002, alternatively a photon from each of the different wavelengths 1062a/b may be used in two photon absorption process. Alternatively, the two atomic state actuators 1012a/b may output the same wavelength. In the alternative, a single atomic state actuator 1012a may be used.

The light from the actuator 1012a is incident upon a chamber window 1060, through which the light travels and is incident upon the second lens 1052b. The lens 1052b, in turn focusses the light onto the atoms in the trapping sites 1058. A further atomic state actuator 1012b is shown positioned, about the plan view of the chamber 1002, orthogonally to the first actuator 1012a. This second actuator 1012b may be substantially similar to the first actuator 1012a where a further chamber window 1064 allows light output from the second actuator 1012b into the chamber 1002. The second actuator 1012b may be used to help address and manipulate atoms, particularly when the system provides a 3D array of optical traps. The optical components for focussing light inside the chamber 1002 from the second actuator is not shown in figure 15.

It is to be understood that figure 15 and its accompanying description is an example of a setup for a neutral atom quantum computer. The atomic state actuators 1012 may be positioned in different locations, including inside or outside the chamber 1002 or part of the chamber 1002. There may also be one or a plurality of different actuators 1012. The actuators 1012 may be integrated or otherwise co-located with other electromagnetic sources such as the laser 1046 or laser system 1032. It is also to be understood that the quantum system 1030 may include other optical or electronic components and/or configurations to allow the neutral atoms to be addressed by the different electromagnetic sources.

Light, for example fluorescence, emitted by the trapped atoms may be output from the chamber 1002 through any of the windows 1050, 1064, 1060. In figure 15, the light 1064 emitted from the trapped atoms travelling out of the window 1050 is, prior to exiting window 1050, collimated by the first lens 1052a. This light 1064, once exited window 1050, is incident upon the dichroic mirror 1042. The dichroic mirror 1042 reflects the emitted light 1064 towards a camera 1066 (which is equivalent to the detector 1020 in figure 14). The camera 1066 may be an electron-multiplying charge-coupled-device (EMCCD) camera. The dichroic mirror 1042 may have an edge or pass-band characteristic filter response that substantially reflects emitted light 1064 but substantially transmits light 1034 and 1040.

Figure 15 is shown as a collection, or system, of separate components, including bulk-optic devices wherein light is propagated between components using free-space propagation. It should be appreciated that other versions of the quantum system set-up 1030 may be implemented using fibre-optics or integrated optic components.

The components of the quantum system 1030, such as, but not limited to, laser system 1032, atom positioner 1008, camera 1066, actuators 1012a/b may be controlled by a classical computer system running one or more pieces of software and/or providing manual user input through an interface to control these components. Details of classical computer system features are provided elsewhere herein.

Example of operating the quantum processor

There now follows an example of operating a quantum processor such as, but not limited to the set-up as shown in figure 15. The atoms in this example are rubidium atoms, however other atoms may be used.

The atoms in the chamber 1002 are initially not in an arrangement suitable for performing quantum computing operations. To get the atoms in an arrangement for quantum processing, a 3D MOT is initiated, as described above, wherein a cold ensemble of $10^6$ atoms with a 1mm$^3$ volume is prepared inside the trapping area 1054. This array of atoms may be referred to as a 'register' and steps of locating atoms in the trapping sites may be referred to as 'register loading'. The optical tweezers using light 1044 isolate individual atoms in the ensemble. The trapping volume of a tweezer may be between 1-10$\mu$m$^3$ or generally in the order of a few $\mu$m$^3$. Such a volume may trap at most one atom at a time. The number and arrangement of tweezers may be in any 1D, 2D or 3D pattern. The tweezers may be tailored by holographic methods known in the art such as, but not limited to that described in: "Florence Nogrette, Henning Labuhn, Sylvain de Leseleuc, Thierry Lahaye and Antoine Browaeys. Synthetic three-dimensional atomic structures assembled atom by atom. Nature 561 (7721):79-82, September 2018"; the entire contents of which are included herein by reference.

When first initiated, the trapping sites of the register may each hold an atom, but in practice the sites will not all initially be occupied, for example only 50% may be occupied. This occupation may be in a non-ordered or random manner. As such a sub register may be formed from the initial register by determining which sites are occupied and then using the tweezer light beam to move atoms from one site to another so that at least one set of two or more trapping sites are occupied according to a predetermined arrangement, for example a 3D periodic grid of atom-occupied sites. Each site in the sub register holds a single atom, hence has unit filling. This may be referred to as being a defect-free sub-register wherein a defect is a site in the sub-register that is intended to be filled but is not, or conversely, a site that is intended to be unfilled but is filled. Other sub-register atom arrangements are also possible.

To determine where the atoms are initially held in the register, the atoms are imaged by collecting their fluorescence on the camera 1066. From these one or more images a program run on a classical computer system may be used to determine the position of the initially occupied sites 1058. Additionally, or alternatively a user may provide input to determine such positions. When a classical computer is used, an algorithm may be used to determine a set of moves, for the tweezers, to rearrange the initial configuration to the desired predetermined configuration. The algorithm may be run on a GPU to affect real time processing. A Field Programmable Gate Array (FPGA) may be used to transfer the data in this operation. The data that corresponds to the required 'moves' is then communicated to the 2D acousto-optic laser beam deflectors 1048.

Optionally a further image may be acquired in a similar way as described above to check whether the sub-register formed has atoms in the predetermined positions. Furthermore, when any quantum processing is complete, the sub-register may be read out in a similar way using the camera 1066. The above process of setting up a sub register is optional; the use of the atoms in the register may be performed, in principle, without the need for setting up a sub register.

Rydberg entanglement

We now discuss, for neutral atom quantum computers the inter-atom interactions, hence entanglement between the qubits.

It is appreciated that in examples described elsewhere herein the quantum states of a neutral atom quantum computer can be represented by two Rydberg states of an atom, however the following general discussion of Rydberg states and entanglement is provided for context, particular where the method and system are implemented in a quantum gate-form as discussed elsewhere herein, wherein the Qubit would be encoded in two distinct hyperfine states of the atoms. The Rydberg level would then be used in a transient manner during entangling gates.

Neutral atoms in their electronic ground state can only interact significantly via contact physical collisions. Single atoms are typically separated by a few micrometres in the register and therefore do not naturally 'feel' each other, therefore they do not normally interact. EM pulses imparted on the qubits may cause different qubits to interact using Rydberg states, in particular through the Rydberg blockade effect. An atom in a Rydberg state or a 'Rydberg atom' is an excited atom with one or more electrons that have a very high principal quantum number, n, entailing that the electron is far from the nucleus and thus allows that atom to interact with another atom. The laser 1012a/b used to impart light at the wavelength needed for the Rydberg transition may be referred to as the Rydberg laser. The Rydberg laser and its output light may be referred to herein as the 'Rydberg channel'.

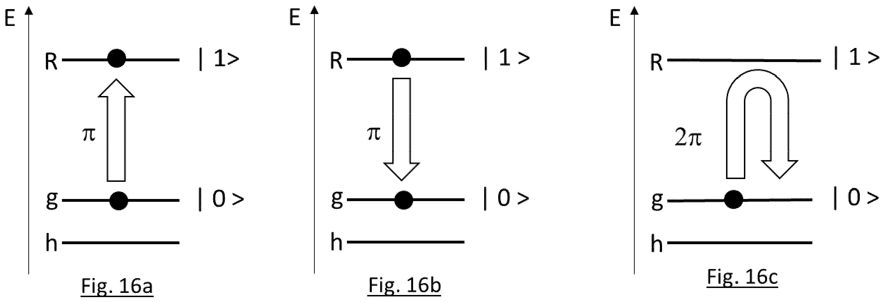

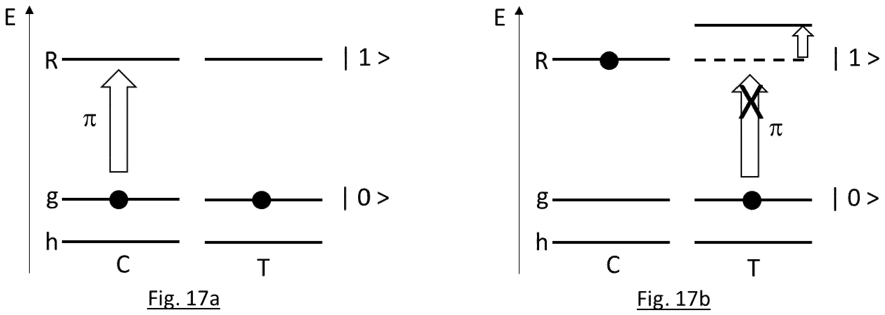

Figures 16a-16c schematically show three levels of the atomic system of the rubidium atoms used herein wherein: the energy levels 'g' and 'h' denote the hyperfine states wherein the state 'g' represents the | 0 > qubit states respectively, whilst 'R' represents the Rydberg state which is the | 1 > qubit state of the atomic system. The examples in figures 16a-16c and 17a, 17b are used for illustrative purposes to explain the Rydberg blockading effect using different single pulses to transition the atom from a ground to a Rydberg state, however in an analogue system the EM signal inducing a blockade may be a series of EM pulses and/or a continuous EM signal spanning the duration of the quantum calculation before the qubit measurements are made.

The label of '$\pi$' in figures 16a and 16b is shown when a single transition is made between the | 0 > and | 1 > state indicating that a $\pi$ change in $\theta$ has been imparted into the atomic system because of the overall transition. Similarly, when a laser field of sufficient duration and amplitude has been imparted onto the atom to transition it from the 'g' energy level up to the R energy level and then back to the g energy level (within the same control field input), this is labelled as '$2\pi$' indicating

that a $2\pi$ change in $\theta$ (i.e., a full Bloch sphere rotation) has been imparted into the atomic system because of the overall transition. It is understood that the input control fields causing these transitions in figures 16a-c have a wavelength resonant with the $|0>$ to $|1>$ transition. Figure 16a shows the atomic transition from the g level to the R level with a $\pi$-pulse. Figure 16b shows the atomic transition from the R level to the g level with a $\pi$-pulse. Figure 16c shows the atomic transition from the g level to the R level and back to the g level again with a $2\pi$-pulse.

An example of the Rydberg blockade is the situation where two neighbouring atoms are both in the $|0>$ state, i.e., both at the g energy level as shown in figure 17a. In figure 17a, the above energy levels are shown for two identical rubidium atoms wherein, for this explanation, the first atom is termed the 'control' atom (or control qubit), labelled 'C'; whilst the second atom is termed the target atom (or target qubit) labelled 'T'. The Rydberg blockade may come into effect when one of the atoms, for example the control atom C is transitioned to the R energy level with a $\pi$-pulse as shown in figure 17a. At a time after the C atom has transitioned to the R state, the equivalent R state energy level for the T atom is raised above its normal energy level due to the effect of the C atom being in a higher energy state. If a $\pi$-pulse is then introduced to the T atom whilst this 'blockade' is in effect, as shown in figure 17b, the $\pi$-pulse will not transition the T atom from the g energy level to the R energy level due to the frequency of the laser being detuned from the frequency difference between the Rydberg-energy level and the g-energy level. As such, the T atom remain in the g state. The Rydberg blockade may therefore be used to enable the state of one qubit (C atom) to affect the state of another qubit (T atom). The cross over the arrow in figure 17b, indicates that the transition did not occur.

Rydberg atoms strongly interact in a way that can be mapped into spin Hamiltonians. Depending on the Rydberg states that are involved in the process, the spins experience different types of interactions that translate into different Hamiltonians. It could be, but is not limited to, dipole-dipole or Van der Waals interaction. When the $|0>$ state is one of the ground states of and the $|1>$ is a Rydberg state, this may map to the Ising model which uses discrete variables representing magnetic dipole moments of atomic "spins" that can be in one of two states. The Hamiltonian of an atomic system using ground-Rydberg states for the different spins may be represented by equation 38.

$$\mathcal{H}(t) = \frac{\hbar}{2}\Omega(t)\sum_j \sigma_j^x - \hbar\delta(t)\sum_j n_j + \sum_{i\neq j}\frac{C_6}{r_{ij}^6}n_i n_j$$

[Equ. 38]

In this equation, the Rydberg state occupancy is: $n_j = (1 + \sigma_j^z)/2$ wherein $\sigma^x$ and $\sigma^z$ are the Pauli matrices of the spin 'j'. The Rabi frequency is $\Omega(t)$ and can be changed by changing the intensity-time profile of the input EM radiation. The detuning is $\delta(t)$ and can be changed by changing the frequency (i.e., wavelength)-time profile of the input EM radiation.

The first two terms are induced by the laser that couples the qubit states and relate to an effective magnetic field, with transverse B component proportional to $\Omega(t)$ and the longitudinal B component proportional to $-\delta(t)$. These two terms describe how individual spins would precess in the presence of an external magnetic field.

The third term in equation 38 relates to the interactions between individual spins. More specifically, it corresponds to an energy penalty that two qubits experience if they are both in the Rydberg states at the same time. The coupling between two spins I and j is of van der Waals type and depends on the inverse of the distance between them $r_{ij}$ to the power of 6, and on a coefficient C6 relative to the Rydberg state.

The system may use other spin states associated with Rydberg states. Instead of using a ground and Rydberg state, the system may use two Rydberg states that are dipole coupled. These states may be $|nS>$ and $|nP>$. Such a system may be described by a different Hamiltonian, namely the XY Hamiltonian represented by Equation 8.

$$\mathcal{H}(t) = \frac{\hbar}{2}\Omega(t)\sum_j \sigma_j^x - \frac{\hbar}{2}\delta(t)\sum_j \sigma_j^z + 2\sum_{i\neq j}\frac{C_3}{r_{ij}^3}\left(\sigma_i^x\sigma_j^x + \sigma_i^y\sigma_j^y\right)$$

[Equ. 39]

The first two terms in equation 39 are typically induced by a microwave field.

The third term in equation 39 corresponds to a coherent exchange between the spin states, transforming the pair state $|01>$ to $|10>$.

Other Hamiltonians may be used such as the XXZ model or the Hamiltonian present elsewhere herein. Examples of a NAQC using Rydberg atoms in optical offer a favourable quality factor Q ~ $10^2$, given by the ratio of coherent evolution rate over the decoherence rate.

Examples of classical computers

Some portions of the above description present the features of the invention in terms of algorithms, routines and steps performed by a classical computer. The following are optional details for classical computers for use with the methods and systems herein. These operations, while described functionally or logically, are understood to be implemented by computer programs and/or dedicated computer hardware. Furthermore, the reference to these arrangements of operations in terms of modules should not be considered to imply a structural limitation and references to functional names is by way of illustration and does not infer a loss of generality. Modules may be software and/or hardware modules.

Unless specifically stated otherwise as apparent from the description above, it is appreciated that throughout the description, discussions utilising terms such as "processing" or "identifying" or "determining" or "displaying" or the like, refer to the action and processes of a computer system, or similar electronic computing device, that manipulates and transforms data represented as physical (electronic) quantities within the computer system memories or registers or other such information storage, transmission or display devices.

It should be understood that the process steps, instructions, of the said method/system as described and claimed, may be executed by computer hardware operating under program control, and not mental steps performed by a human. Similarly, all of the types of data described and claimed may be stored in a computer readable storage medium operated by a computer system, and are not simply disembodied abstract ideas.

The methods/systems may also relates to an apparatus for performing the operations herein. This apparatus may be specially constructed for the required purposes, or it may comprise a general-purpose computer selectively activated or reconfigured by a computer program stored on a computer readable medium that can be executed by the computer. Such a computer program is stored in a computer readable storage medium, such as, but not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

Any controller(s) referred to above may take any suitable form. For instance, the controller(s) may comprise processing circuitry, including the one or more processors, and the memory devices comprising a single memory unit or a plurality of memory units. The memory devices may store computer program instructions that, when loaded into processing circuitry, control the operation of the route provider and/or route requester. The computer program instructions may provide the logic and routines that enable the apparatus to perform the functionality described above. The computer program instructions may arrive at the apparatus via an electromagnetic carrier signal or be copied from a physical entity such as a computer program product, a non-volatile electronic memory device (e.g. flash memory) or a record medium such as a CD-ROM or DVD. Typically, the processor(s) of the controller(s) may be coupled to both volatile memory and non-volatile memory. The computer program is stored in the non-volatile memory and may be executed by the processor(s) using the volatile memory for temporary storage of data or data and instructions. Examples of volatile memory include RAM, DRAM, SDRAM etc. Examples of non-volatile memory include ROM, PROM, EEPROM, flash memory, optical storage, magnetic storage, etc. The terms 'memory', 'memory medium' and 'storage medium' when used in this specification are intended to relate primarily to memory comprising both non-volatile memory and volatile memory unless the context implies otherwise, although the terms may also cover one or more volatile memories only, one or more non-volatile memories only, or one or more volatile memories and one or more non-volatile memories.

The algorithms and operations presented herein can be executed by any type or brand of computer or other apparatus. Various general-purpose systems may also be used with programs in accordance with the teachings herein, or it may prove convenient to construct more specialized apparatus to perform the required method steps. The required structure for a variety of these systems will be apparent to those of skill in the art, along with equivalent variations. In addition, the method/system is not described with reference to any particular programming language. It is appreciated that a variety of programming languages may be used to implement the teachings of the invention as described herein.

## Claims

1. A computer implemented method for determining a plurality of spatial positions for a plurality of qubits; the plurality of qubits associated with a graph; the graph comprising

    i) a plurality of vertices and a plurality of edges wherein each of the qubits corresponds to a different vertex;
    ii) no underlying lattice for defining vertex positions;

    the method comprising, in any order:

a) determining a first spatial position based on a first distance between a first pair of the qubits; the first distance based on an average value of a parameter associated with the plurality edges; and,

b) determining a second spatial position based on a second distance between a second pair of the qubits; the second distance based on the average value; the first pair of the qubits comprising at least one different qubit to the second pair of the qubits; the second spatial position being a different spatial position to the first spatial position.

2.  The method as claimed in claim 1 wherein the first qubit pair comprises a first of the plurality of qubits; the second qubit pair comprises a second of the plurality of qubits; the first and second qubits being different qubits; the step of determining the at least two spatial positions comprises:

    allowing for either of the first qubit or second qubit to occupy a first position;
    selecting the first qubit to occupy the first position;
    selecting the second qubit to occupy a second position different to the first position.

3.  The method as claimed in claims 1 or 2 wherein the plurality of qubits are accommodatable in a region of space; the step of determining the at least two spatial positions comprises determining the positions of two of the qubits in a same occupiable region of space; the region of space comprising the occupiable region of space two.

4.  The method of any preceding claim comprising at least one of:

    storing the at least two spatial positions in a memory;
    using the at least two spatial positions in a computation using the different spatial for the plurality of qubits.

5.  The method of claim 4 comprising outputting a control signal for operating a quantum computer for performing the computation; the quantum computer comprising the plurality of qubits; the control signal generated using the one or more positions.

6.  The method of claims 4 or 5 comprising using the quantum computer to perform the computation.

7.  The method of claim 6 wherein the quantum computer comprises an analogue quantum computer.

8.  The method of any of claims 5-7 wherein the quantum computer comprises a neutral atom quantum computer.

9.  The method of claim 4 wherein the computation comprises an emulation of a quantum computation.

10. The method of claim 9 wherein the emulation comprises using a tensor network.

11. The method of any preceding claim wherein the parameter is a first parameter; the method further comprises determining a set of one or more vertices of the graph using an average value of a second parameter associated with the plurality of vertices; the set of one or more vertices comprising vertices with a common relationship to a common vertex not in the set.

12. The method of claim 11 wherein the common relationship comprises at least one of:

    a) a minimum distance between the said vertex and the common vertex
    b) a maximum distance between the said vertex and the common vertex.

13. The method of claim 11 wherein the set of vertices is further determined using a value associated with a standard deviation of the plurality of the edge values.

14. The method of any preceding claim 11 wherein the steps of determining the first and second spatial positions comprises using a function outputting the first and second distances based on the average value; the function outputting the first and second distances upon finding a solution satisfying one or more conditions.

15. A system for determining a plurality of spatial positions for a plurality of qubits; the plurality of qubits associated with a graph; the graph comprising:

i) a plurality of vertices and a plurality of edges wherein each of the qubits corresponds to a different vertex;
ii) no underlying lattice for defining vertex positions;

the system comprising a computer processor configured to, in any order:

a) determine a first spatial position based on a first distance between a first pair of the qubits; the first distance based on an average value of a parameter associated with the plurality edges; and,
b) determine a second spatial position based on a second distance between a second pair of the qubits; the second distance based on the average value; the first pair of the qubits comprising at least one different qubit to the second pair of the qubits; the second spatial position being a different spatial position to the first spatial position.

Fig. 1a

Figure 1b. PRIOR ART

2

S2 | determining a first spatial position based on a first distance between a first pair of the qubits; the first distance based on an average value of a parameter associated with the plurality edges;

S4 | determining a second spatial position based on a second distance between a second pair of the qubits; the second distance based on the average value.

Fig. 2

EP 4 579 542 A1

Fig. 3b

Fig. 3a

Fig. 3c

Fig. 3d

Fig. 4

Fig. 5

Fig. 6

# Fig. 7

**PRIOR ART** | **PRESENT METHOD**

INPUT DATA REQUIRED FOR DEFINING THE GRAPHS USED FOR EMULATION

SA

SB

AVERAGE VALUE #1
(average number of friends)

AVERAGE VALUE #2
(average strength of friend connection)

EMULATION

EMULATION

Compare

GRAPH 1 using
#1=3
#2=1

GRAPH 2 using
#1=2
#2=5

EMULATION

EMULATION

Compare

Fig. 7

EP 4 579 542 A1

Fig. 8

Fig. 9; PRIOR ART

EP 4 579 542 A1

S1000

```
┌─────────────────────────────────────────────────┐
│ performing a first calculation using at least:   │   S1002
│ i)    a first value associated with a number of  │
│ the node connections between the first node and  │
│ the second node; and,                            │
│ ii)   a second value associated with the first   │
│ interaction strength;                            │
└─────────────────────────────────────────────────┘
```

```
┌─────────────────────────────────────────────────┐
│ performing a second calculation using at least:  │   S1004
│ iii)  a third value associated with a number of  │
│ the node connections between the first node and  │
│ the third node;                                  │
│ iv)   a fourth value associated with the second  │
│ interaction strength; wherein the second and     │
│ fourth values are different non-zero values;     │
└─────────────────────────────────────────────────┘
```

```
┌─────────────────────────────────────────────────┐
│ selecting the first node-qubit mapping for use   │   S1006
│ in the emulation based on at least one of:       │
│ a result of the first calculation for the first  │
│ node-qubit mapping;                              │
│ a result of the second calculation for the first │
│ node-qubit mapping;                              │
└─────────────────────────────────────────────────┘
```

```
┌─────────────────────────────────────────────────┐
│ emulating the quantum computation using the      │   S1008
│ first node-qubit mapping                         │
└─────────────────────────────────────────────────┘
```

Fig. 10

Fig. 11a

Fig. 11b

Fig. 11c

Fig. 11d

Fig. 12

Fig. 13

EP 4 579 542 A1

Fig. 14

Fig. 15

EP 4 579 542 A1

Fig. 16a

Fig. 16b

Fig. 16c

Fig. 17a

Fig. 17b

EP 4 579 542 A1

Europäisches
Patentamt

European
Patent Office

Office européen
des brevets

# EUROPEAN SEARCH REPORT

**Application Number**

EP 23 30 7429

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Goswami Kapil ET AL: "Solving optimization problems with local light-shift encoding on Rydberg quantum annealers", <br> , <br> 22 December 2023 (2023-12-22), pages 1-17, XP093173107, <br> arXiv <br> Retrieved from the Internet: <br> URL:https://arxiv.org/pdf/2308.07798 <br> [retrieved on 2024-06-11] <br> * abstract * <br> * figure 1 * <br> * sections II and III * <br> ----- | 1-15 | INV. <br> G06N10/80 <br> G06N10/60 <br> G06N5/01 <br><br> ADD. <br> G06N10/40 |
|  |  |  | **TECHNICAL FIELDS SEARCHED (IPC)** <br><br> G06N |

The present search report has been drawn up for all claims

| Place of search | Date of completion of the search | Examiner |
|---|---|---|
| The Hague | 11 June 2024 | Theissing, Simon |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. MICHEL ; S. GRIJALVA ; L. HENRIET ; C. DOMAIN ; A. BROWAEYS**. Blueprint for a digital-analog variational quantum eigensolver using rydberg atom arrays. *Phys. Rev. A*, April 2023, vol. 107, 042602
- **HAROLD J METCALF ; PETER VAN DER STRATEN**. Laser cooling and trapping of atoms. *JOSA B*, 2003, vol. 20 (5), 887-908
- **FLORENCE NOGRETTE ; HENNING LABUHN ; SYLVAIN DE LESELEUC ; THIERRY LAHAYE ; ANTOINE BROWAEYS**. Synthetic three-dimensional atomic structures assembled atom by atom. *Nature*, September 2018, vol. 561 (7721), 79-82